# EUROPEAN PATENT SPECIFICATION

(11) **EP 3 431 284 B1**
(45) Date of publication and mention of the grant of the patent: **01.07.2020**
(21) Application number: 17766676.5
(22) Date of filing: 14.03.2017
(51) Int. Cl.: B32B 3/30, B32B 27/30, B65D 30/02, B65D 65/40, B32B 27/08, B29C 59/04, B32B 1/02, B29C 35/08, B29C 59/02

(54) **LIQUID-REPELLENT RESIN SHEET AND ARTICLE USING SAME**
FLÜSSIGKEITSABWEISENDE HARZFOLIE UND ARTIKEL DAMIT
FEUILLE DE RÉSINE REPOUSSANT LES LIQUIDES ET ARTICLE UTILISANT CELLE-CI

(30) Priority: 14.03.2016 JP 2016050176
(43) Date of publication of application: 23.01.2019
(73) Proprietor: Denka Company Limited, Tokyo 103-8338 (JP)
(72) Inventor: FUJIWARA Junpei, Isesaki-shi Gunma 372-0855 (JP); OSAWA Tomohiro, Isesaki-shi Gunma 372-0855 (JP); HOSHINO Shogo, Isesaki-shi Gunma 372-0855 (JP)
(74) Representative: Beckmann, Claus
(86) International application number: PCT/JP2017/010180
(87) International publication number: WO 2017/159678

(56) References cited:
- WO-A1-2014/087695
- JP-A- H11 171 592
- JP-A- 2003 001 736
- JP-A- 2011 083 689
- JP-A- 2013 208 817
- JP-A- 2014 213 937
- JP-A- 2015 025 052
- US-A1- 2013 251 948
- US-A1- 2013 251 948
- US-A1- 2015 125 659
- US-A1- 2015 314 554

## Description

### TECHNICAL FIELD

The present invention relates to a resin sheet that has liquid repellency and an article using the same.

### BACKGROUND ART

Conventionally, sheets formed from paper material or polymer material have been used in building materials such as wallpaper; packaging materials for food products such as soft drinks, juice drinks, and discretionary food and drink products or the like; and daily-use articles such as rain gear. For example, Patent Document 1 proposes a sheet formed by coating a nonwoven fabric with a fluorine-based copolymer. Additionally, Patent Documents 2 and 3 propose liquid repellents for use in paper materials and fabrics.

Meanwhile, a film obtained by coating a PET resin with an oil repellent has been proposed for display components (Patent Document 4). Furthermore, a film obtained by coating a bumpy surface with a water repellent has been proposed for use in automotive parts (Patent Document 5). Patent Document 6 proposes a thermoplastic resin sheet having water repellency.

Patent Document 1: JP 2010-196196 A
Patent Document 2: JP 2009-256506 A
Patent Document 3: JP 2007-291373 A
Patent Document 4: JP 2009-104054 A
Patent Document 5: JP 2008-122435 A
Patent Document 6: WO 2014/087695 A1

Documents US 2015/314554 A1 and US 2013/251948 A1 relate to liquid-repellent resin sheets comprising a bumpy layer.

### SUMMARY OF INVENTION

Even when using the above-mentioned sheets or films formed by coating a paper material or a PET resin with an oil repellent, packaging materials for daily-use articles including food products have the problem wherein the food (oil-based liquid) adheres thereto. For example, in pouches for packaging food products, there were cases in which oil-based liquids or surfactant-based liquids adhered to the packaging material. However, such problems were not able to be satisfactorily solved by the means described in Patent Documents 1 to 4. Additionally, even by using the means described in Patent Document 5, such problems could not be satisfactorily solved for oil-based liquids and surfactant-based liquids.

The present invention was made in consideration of the above-mentioned circumstances, and addresses the problem of providing a resin sheet having liquid repellency. Additionally, the present invention has the purpose of providing an article using this liquid-repellent resin sheet.

The present inventors reasoned that, in order to prevent the adherence of water-based liquids, oil-based liquids and surfactant-based liquids, a sheet surface should be provided with liquid repellency, and thus studied various means for achieving liquid repellency. In the process thereof, the present inventors discovered that high liquid repellency enabling the adherence of water-based, oil-based and surfactant-based liquids to be suppressed could be imparted to a sheet surface by forming a microscopic bumpy shape on the sheet surface and coating the surface of the bumpy shape with a liquid repellent comprising a fluorine-based copolymer resin containing hydrophilic microparticles, thereby arriving at the present invention.

In other words, the liquid-repellent resin sheet according to the present invention, which solves the above-mentioned problem, has the following features.
(1) A liquid-repellent resin sheet comprising a bumpy layer having bumps of at least one type on one surface thereof, and a liquid-repellent layer provided on the surface having the bumps on the bumpy layer; wherein the bumpy layer contains a thermoplastic resin composition; the liquid-repellent layer contains a fluorine-based copolymer resin composition containing hydrophilic microparticles; and the bumps have an aspect ratio (bump height/bump bottom diameter) of 0.6 to 2.5.
   The present invention may have the following features.
(2) The liquid-repellent resin sheet according to (1), wherein the thermoplastic resin composition has a melt mass-flow rate, at 190 °C to 300 °C, of 4 g/10 min or higher.
(3) The liquid-repellent resin sheet according to (1) or (2), wherein the hydrophilic microparticles have an average primary particle size of 5 nm to 1000 nm.
(4) The liquid-repellent resin sheet according to any one of (1) to (3), wherein the hydrophilic microparticles are particles of hydrophilic silica having silanol groups on surfaces thereof.
(5) The liquid-repellent resin sheet according to any one of (1) to (4), wherein the bumps include first bumps and second bumps; the heights of the first bumps and the heights of the second bumps are 10 µm to 150 µm; and the spacing between the tops of adjacent bumps is 10 µm to 100 µm.
(6) The liquid-repellent resin sheet according to any one of (1) to (5), wherein the hydrophilic microparticle content is 20 mass% to 80 mass%, and the fluorine-based copolymer resin content is 80 mass% to 20 mass%.
(7) The liquid-repellent resin sheet according to any one of (1) to (6), having, on the other surface of the bumpy layer that is not the surface having the bumps, at least one or more substrate layers containing a resin selected from among styrene resins, olefin resins, polyester resins, nylon resins, ethylene-vinyl alcohol copolymer resins, acrylic resins and sealant resins.
(8) The liquid-repellent resin sheet according to any one of (1) to (7), wherein the surface on the side having the liquid-repellent layer has a contact angle of 130° or more and a sliding angle of 40° or less with respect to a water-based liquid, an oil-based liquid or a surfactant-based liquid.
(9) Additionally, the article using the liquid-repellent resin sheet according to the present invention is an article using the liquid-repellent resin sheet according to any one of (1) to (8).
(10) The above-mentioned article may be a building material, a daily-use article or a packaging material. (11) The above-mentioned article may be a wallpaper material, a kitchen/bathroom material, a lid material for a food product container, a pouch material or rain gear.

According to the present invention, a resin sheet having liquid repellency can be provided. Additionally, an article using the liquid-repellent resin sheet can be provided.

### BRIEF DESCRIPTION OF DRAWINGS

Fig. 1 is a section view showing an example of a liquid-repellent resin sheet according to a first embodiment.
Fig. 2 is a schematic plan view of the liquid-repellent resin sheet in Fig. 1.
Fig. 3 is a section view showing another example of a liquid-repellent resin sheet according to the first embodiment.
Fig. 4 is a schematic plan view of the liquid-repellent resin sheet in Fig. 3.
Fig. 5 is a section view showing the layer structure of a liquid-repellent resin sheet according to a second embodiment of the present invention.
Fig. 6 is a section view showing the layer structure of a liquid-repellent resin sheet according to a third embodiment of the present invention.
Fig. 7 is a section view showing the layer structure of a liquid-repellent resin sheet according to a fourth embodiment of the present invention.

### DESCRIPTION OF EMBODIMENTS

### <Liquid-repellent resin sheet>

The liquid-repellent resin sheet (hereinafter referred to as "resin sheet") has a bumpy layer having bumps of at least one type on one surface thereof, and a liquid-repellent layer provided on the surface having the bumps on the bumpy layer. Hereinbelow, various embodiments of the resin sheet will be explained and methods for producing the resin sheet will also be explained. When a specific explanation provided for one embodiment also applies to other embodiments, the explanation will be omitted for the other embodiments.

### [First embodiment]

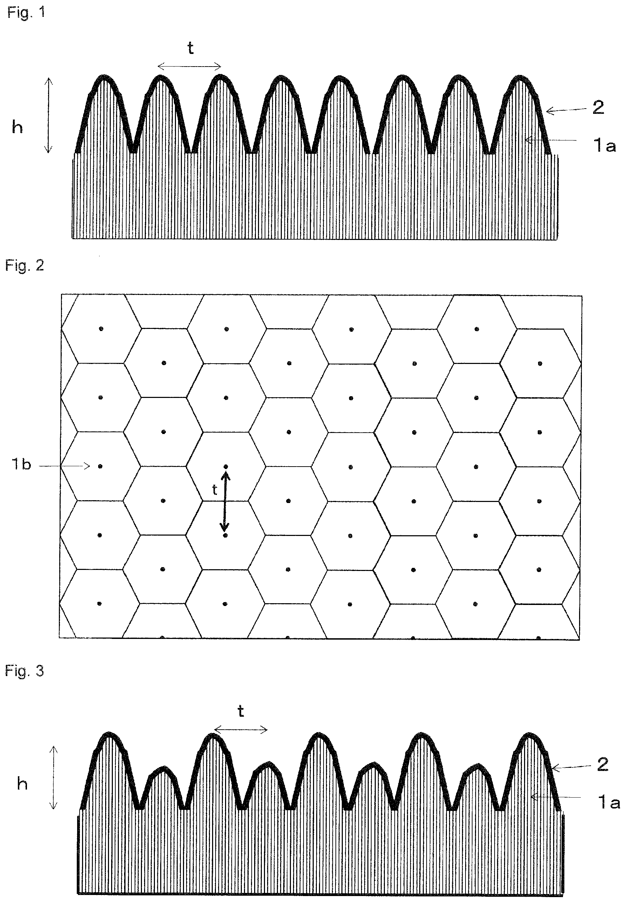

Fig. 1 and 3 show section views of resin sheets according to the first embodiment. These resin sheets have a bumpy layer 1 having bumps 1a of one or more types on one surface thereof, and a liquid-repellent layer 2 provided on the surface having the bumps 1a on the bumpy layer 1.

### (Bumpy layer)

The bumpy layer is a layer with a microscopic bumpy shape having bumps of one or more types on one surface thereof. The bumps may be bumps of just one type as shown in Fig. 1, but preferably include first bumps and second bumps having different shapes (heights), as shown in Fig. 3. Additionally, the bumps may be bumps of three or more types having different shapes. When the bumps include first bumps and second bumps, the height of the first bumps is made higher than the height of the second bumps. Additionally, although there are no restrictions on the arrangement of the first bumps and the second bumps, it is preferable, in terms of the liquid repellency, for the first bumps and the second bumps to be arranged in alternating fashion. The mode of arrangement of the bumps is not particularly limited, and it is possible to use a checkerboard arrangement in which the bumps are arranged laterally and longitudinally, or a staggered arrangement. A staggered arrangement is preferred for being able to better maintain water repellency.

The aspect ratio (bump height/bump bottom diameter) of the bumps is 0.6 to 2.5, and is preferably an aspect ratio that is at least higher than 0.7. Additionally, the aspect ratio may be 2.3 or less, or 2.0 or less.

The bump height (h) is preferably 10 µm to 150 µm, and more preferably 20 µm to 100 µm, including cases in which there is only one type of bump and cases in which there are multiple types. By setting the bump height to 10 µm or more, it is possible to better ensure liquid repellency. By setting the bump height to 150 µm or less, it is possible to prevent instability in the dimensions of the bumpy shape in a mold for forming the bumpy shape. The bump height includes the thickness of the liquid-repellent layer (100 nm to 4000 nm) that is to be explained below.

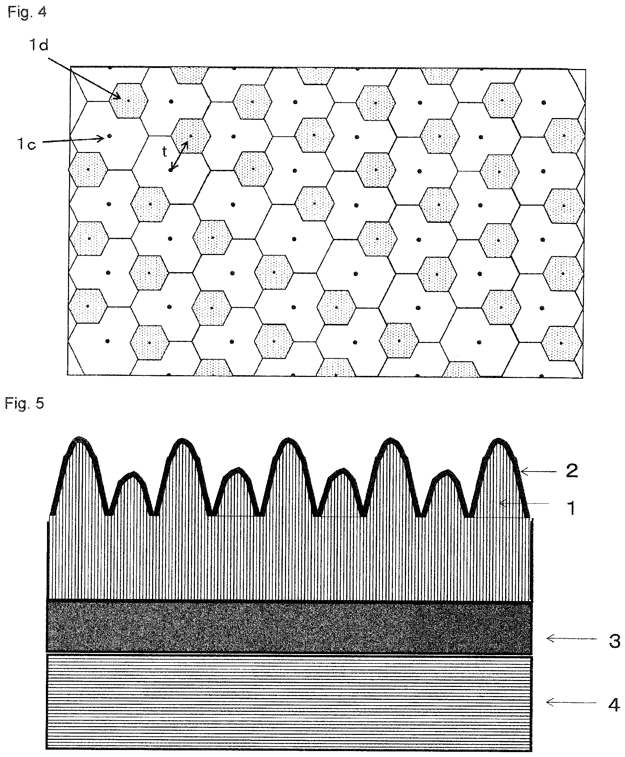

The top spacing (t) between adjacent bumps is preferably 10 µm to 100 µm, and more preferably 20 µm to 80 µm. The top spacing (t) refers to the distance between the tops 1b of adjacent bumps, as shown in Fig. 2, and refers to the distance between the tops of the bumps, as long as the bumps are adjacent, even if the bumps have different shapes as shown in Fig. 4. If the top spacing is less than 10 µm, the dimensions of the bumpy shape may become unstable in a mold for forming the bumpy shape. Additionally, it is possible to prevent decreases in liquid repellency by setting the top spacing to 100 µm or less.

The bumps may be in the shape of pyramids such as triangular pyramids, square pyramids, hexagonal pyramids, octagonal pyramids and cones, or truncated pyramids or truncated cones, among which triangular pyramidal and hexagonal pyramidal bumps have particularly excellent liquid repellency.

The bumpy layer contains a thermoplastic resin composition. The bumpy layer may be formed by using the thermoplastic resin composition. The thermoplastic resin composition may contain a crystalline polymer, an amorphous polymer, or a resin in which a crystalline polymer and an amorphous polymer are alloyed at an arbitrary ratio. The transferability of the bumpy shape can be improved by raising the crystalline polymer content in the thermoplastic resin composition to 35 mass% or more. Additionally, the thermoplastic resin composition preferably has a melt mass-flow rate, at 190 °C to 300 °C, of 4 g/10 min or higher. The transferability of the bumpy shape can be improved by setting the melt mass-flow rate to be 4 g/10 min or higher. The melt mass-flow rate is the value measured under conditions with a load of 1.20 kg, 2.16 kg, 3.80 kg, 5.00 kg or 10.00 kg, and with the testing temperature at any temperature from 190 °C to 300 °C, in compliance with JIS K 7210.

A crystalline polymer resin refers to a polymer resin that has an ordered molecular arrangement, and for which crystal X-ray diffraction can be clearly observed. Specific examples include polyolefin polymers such as polyethylene polymers and polypropylene polymers, polyvinylidene fluoride (PVDF resin), polyester resins, isotactic polystyrene, polyamide, polyoxymethylene and polyphenylene oxide, among which polyethylene polymers, polypropylene polymers, polyvinylidene fluoride (PVDF resin) and polyester resins are particularly preferred.

Examples of polyethylene polymers include high-density polyethylene, low-density polyethylene, linear low-density polyethylene, linear medium-density polyethylene, and copolymers and graft copolymers containing ethylene as the main component, and blends of the above. Examples of the aforementioned copolymers include ethylene-vinyl acetate copolymers, ethylene-acrylic acid copolymers, ethylene-acrylic acid ester copolymers, ethylene-methacrylic acid ester copolymers, and ethylene-vinyl acetate-vinyl chloride copolymers. Examples of graft copolymers include styrene-ethylene graft copolymers.

Examples of polypropylene polymers include homopolypropylene, random polypropylene and block polypropylene. When using homopolypropylene, the structure of the homopolypropylene may be isotactic, atactic or syndiotactic. When using a random polypropylene, the α-olefin that is coplymerized with the propylene preferably has 2 to 20 carbon atoms, more preferably 4 to 12 carbon atoms, and examples include ethylene, 1-butene, 1-pentene, 1-hexene, 1-heptene, 1-octene, 1-nonene and 1-decene. When using a block polypropylene, examples include block copolymers (block polypropylene), and block copolymers or graft copolymers containing rubber components. These olefin resins may be used alone, or in combination with other olefin resins.

Polyvinylidene fluoride (PVDF resin) refers to vinylidene fluoride homopolymers and vinylidene fluoride copolymers containing polyvinylidene fluoride as the main components thereof. PVDF resin is a crystalline resin that exhibits various crystal structures such as α-type, β-type, γ-type and α-p-type structures. Examples of vinylidene fluoride copolymers include vinylidene fluoride-hexafluoropropylene copolymer, vinylidene fluoride-tetrafluoroethylene copolymer, vinylidene fluoride-chlorotrifluoroethylene copolymer, vinylidene fluoride-trifluoroethylene copolymer, vinylidene fluoride-tetratfluoroethylene-hexafluoropropylene ternary copolymer, vinylidene fluoride-chlorotrifluoroethylene-hexafluoropropylene ternary copolymer, and mixtures of two or more of the above.

Polyester resins include polyetheylene terephthalate, polybutylene terephthalate, polyethylene-2,6-naphthalate and polymethylene terephthalate, and as copolymer components, it is possible to use polyester resins copolymerized, for example, with diol components such as diethylene glycol, neopentyl glycol and polyalkylene glycol, or dicarboxylic acid components such as adipic acid, sebacic acid, phthalic acid, isophthalic acid and 2,6-naphthalene dicarboxylic acid.

Amorphous polymer resins refer to polymer resins having irregularly bonded molecular chains, for which crystal X-ray diffraction cannot be clearly observed. Specific examples include amorphous poly-alpha-olefins, polyvinyl chlorides, polystyrenes, polymethacrylic acid esters and polycarbonates.

Examples of amorphous poly-alpha-olefins include simple propylene and copolymers of propylene with ethylene or propylene with butene-1.

The polyvinyl chlorides may be polyvinyl chloride homopolymers or copolymers of polyvinyl chloride with another comonomer. If the polyvinyl chloride is a copolymer, it may be a random copolymer or a graft copolymer. An example of a graft copolymer is one having, for example, an ethylene-vinyl acetate copolymer or a thermoplastic urethane polymer as the backbone polymer, and having vinyl chloride graft-polymerized thereto. Polyvinyl chloride refers to a soft polyvinyl chloride that can be extrusion-molded, and may contain an additive such as a polymer plasticizer. While generally known polymer plasticizers may be used as the polymer plasticizer, ethylene copolymer-based polymer plasticizers such as ethylene-vinyl acetate-carbon monoxide copolymer, ethylene-(meth)acrylic acid ester-carbon monoxide copolymer and ethylene-vinyl acetate copolymer having a high vinyl acetate content may be named as preferred examples.

Examples of polystyrenes include homo- or copolymers of styrene monomers such as styrene, α-methylstyrene, p-methylstyrene, dimethylstyrene, p-t-butylstyrene and chlorostyrene; copolymers of said styrene monomers with other monomers, such as styrene-acrylonitrile copolymer (AS resin); and graft polymers obtained by graft-polymerizing said styrene monomers in the presence of other polymers, e.g., diene rubber polymers such as polybutadiene, styrene-butadiene copolymer, polyisoprene and polychloroprene, examples of which include high-impact polystyrene (HIPS resin) and styrene-acrylonitrile graft polymer (ABS resin).

The polymethacrylic acid ester is not particularly limited as to the structure thereof, as long as it is a vinyl polymer that is based on methacrylic acid ester monomers. Examples of this methacrylic acid ester monomer include methyl methacrylate, ethyl methacrylate, propyl methacrylate, butyl methacrylate, pentyl methacrylate and hexyl methacrylate. Of these, methyl methacrylate is particularly preferred. Additionally, the alkyl groups such as propyl groups, butyl groups, pentyl groups and hexyl groups in the methacrylic acid ester monomer may be linear or branched. Additionally, the methacrylic acid ester resin contained in the resin composition of the present embodiment may be a homopolymer of a methacrylic acid ester monomer, or a copolymer of multiple acrylic acid ester monomers. Alternatively, it may have monomer units derived from generally known vinyl compounds other than methacrylic acid esters, such as ethylene, propylene, butadiene, styrene, α-methylstyrene, acrylonitrile and acrylic acid.

Examples of polycarbonates include aromatic polycarbonate resins, aliphatic polycarbonate resins and aromatic-aliphatic polycarbonate resins. It is possible to use those that are normally classified as engineering plastics, and that are generally obtained by means of polycondensation of bisphenol A with phosgene (phosgene method) or polycondensation of bisphenol A with carbonic acid esters (ester exchange method). The bisphenol raw materials may include 2,2-bis-(4-hydroxyphenyl)propane (bisphenol A), 2,4-bis-(4-hydroxyphenyl)-methyl-butane and 1,1-bis-(4-hydroxyphenyl)cyclohexane. It is also possible to use a homopolycarbonate resin, a copolycarbonate resin copolymerized with carbonic acid, or a mixture thereof.

The thermoplastic resin composition may contain other additives within a range not interfering with the effects of the present invention. As other additives, it is possible to add, within a range not interfering with the effects of the present invention, colorants such as pigments and dyes, mold release agents such as silicone oils or alkyl esters, fibrous reinforcing agents such as glass fibers, granular lubricants such as talc, clay and silica, antistatic agents such as polyalkylene glycol and salt compounds containing sulfonic acid and alkali metals, ultraviolet absorption agents and antimicrobial agents.

The thickness of the bumpy layer is not particularly limited, and may be 50 µm to 1200 µm, including the height of the abovementioned bumps.

The method for forming the bumpy layer is not particularly limited, and a generally known method may be used. For example, the bumpy layer may be formed by means of a method of production by extrusion molding, a method of production by photolithograpy, a method of production by hot-pressing, or a method of production by using a patterned roller and a UV-curable resin.

### (Liquid-repellent layer)

The liquid-repellent layer is provided on the surface having the bumps on the bumpy layer. The liquid-repellent layer contains a fluorine-based copolymer resin composition containing hydrophilic microparticles. The liquid-repellent layer can be formed by using a fluorine-based copolymer resin composition containing hydrophilic microparticles. The fluorine-based copolymer resin composition is a resin composition containing a fluorine-based copolymer resin as the main component. The "main component" refers to the component that is mainly contained in the composition, and means that the component is contained in the composition at a concentration of 50 mass% or more, 80 mass% or more, 90 mass% or more, or 95 mass% or more.

The fluorine-based copolymer resin is a copolymer resin including fluorine in the structural units, and preferably contains a copolymer A and a copolymer B. The copolymers A and B may contain the structural units *a* to *d* indicated below, with the proviso that the copolymer A contains the structural units *a* and the structural units *b,* and the copolymer B contains the structural units *a* and the structural units *c* indicated below. The copolymer A mainly contributes to the liquid repellency of the resin sheet, and the copolymer B mainly contributes to the durability of the resin sheet.

The structural units *a* are groups, having 1 to 6 carbon atoms, in which some or all of the hydrogen atoms in an alkyl group are substituted with fluorine atoms. The structural units *a* may be linear polyfluorohydrocarbon groups having one or more unsaturated groups such as carbon-carbon unsaturated double bonds. The unsaturated groups are preferably (meth)acrylate groups.

The structural units *b* are monomers having saturated hydrocarbon groups having 16 to 40 carbon atoms, and are preferably (meth)acrylates including alkyl groups having 16 to 40 carbon atoms, more preferably stearyl (meth)acrylate or behenyl (meth)acrylate.

The structural units *c* are monomers not containing fluorine atoms, derived from monomers having a crosslinkable functional group. The crosslinkable functional group is preferably an isocyanate group, a blocked isocyanate group, an alkoxysilyl group, an amino group, an alkoxymethylamide group, a silanol group, an ammonium group, an amide group, an epoxy group, a hydroxyl group, an oxazoline group, a carboxyl group, an alkenyl group, a sulfonic acid group or the like. Additionally, it is more preferably an epoxy group, a hydroxyl group, a blocked isocyanate group, an alkoxysilyl group, an amino group or a carboxyl group.

The monomers forming the structural units *c* are preferably (meth)acrylates, compounds having two or more copolymerizable groups, or vinyl ethers or vinyl esters. The structural units *c* may be derived from a mixture of two or more different types. The structural units *c* mainly affect the film-forming properties of the liquid-repellent film and the bonding or adhesion of the liquid-repellent composition to the substrate, and contribute to the durability.

The structural units *d* are structural units derived from monomers having polymeric groups other than the structural units *a, b* and *c*. Additionally, they are preferably derived from monomers that have good film-forming properties and from which homogeneous copolymer solutions or dispersions can be obtained. The structural units *d* are more preferably derived from vinyl chloride, vinylidene chloride, cyclohexyl methacrylate, polyoxyethylene di(meth)acrylate, alkyl ethers of polyoxyethylene di(meth)acrylate and dioctyl maleate. The structural units *d* can contribute to improving the adhesion of the composition to the substrate and improving the dispersion properties.

Examples of fluorine-based copolymer resins that satisfy the above conditions include, among commercially available products, "AG-E070", "AG-E550D" (manufactured by Asahi Glass) and the like.

The hydrophilic microparticles are microparticles in which the surfaces of the microparticles are hydrophilic (the property of becoming wet with purified water). In Patent Document 6, microparticles in which the surfaces are hydrophobic (the property of not becoming wet with purified water) are used, and for example, hydrophobic silica microparticles in which the microparticle surfaces have trimethysilyl groups are used. Hydrophobic silica has poor dispersion properties when mixed with purified water. Hydrophobic silica and hydrophilic silica can be distinguished from each other by measuring water adsorption. For example, both types of silica can be dried for 2 hours at 105 °C, then placed in an environment with a relative humidity of 80% and a temperature of 25 °C, and the moisture adsorption behavior evaluated by the increase in weight. In the case of hydrophilic silica, the moisture absorption increases with time and up to about 5 mass% is absorbed. In contrast therewith, in the case of hydrophobic silica, about 0.2 mass% is absorbed, but there is no further absorption (Technical Information Institute, *Saishin Filler Gijutsu Zenshu Kakushu Filler no Kozo*/*Specs*/*Kino [Data-shu]* [Latest Filler Technical Collection: Structures/Specs/Functions of Various Fillers [Data Collection]]).

As the hydrophilic microparticles, it is possible to use microparticles in which the microparticle surfaces are hydrophilic (the property of becoming wet with purified water). Among the above, it is preferable to use those that have good dispersion properties (in which the microparticles do not aggregate or precipitate) when the hydrophilic microparticles are mixed with purified water.

Examples of the hydrophilic microparticles include colloidal silica, colloidal alumina, colloidal titania, zeolite, silica gels, silica, alumina, titania, calcium carbonate, calcium oxide, talc, diatomaceous earth, vermiculite, expanded vermiculite, red iron oxide, calcinated shell calcium and phyllosilicates, and metallic microparticles, and it is preferable to use at least one substance selected from this group. Hydrophilic silica having silanol groups on the surface thereof is preferred for being able to provide superior oil repellency. Commercially available products include, for example, "Aerosil 200", "Aerosil 300" and "Aerosil OX50" (manufactured by Nippon Aerosil).

The average primary particle size of the hydrophilic microparticles is preferably 5 nm to 1000 nm, and more preferably 7 nm to 200 nm. By setting the average primary particle size to be 5 to 1000 nm, good liquid repellency is obtained, and good dispersion in fluorine-based copolymer resins is obtained. The average primary particle size is a value obtained by using a scanning electron microscope to capture multiple images from different perspectives, using image analysis software to measure the diameters of 3000 to 5000 arbitrarily extracted hydrophilic microparticles, and calculating the average value thereof.

The liquid-repellent layer preferably has a hydrophilic microparticle content of 20 mass% to 80 mass%, and a fluorine-based copolymer resin content of 80 mass% to 20 mass%. By forming a composition in these ranges, it is possible to obtain liquid sliding properties on the multilayer resin sheet. Additionally, it is possible to suppress decreases in the liquid repellency and the liquid sliding properties that may occur in some cases when the hydrophilic microparticle content is less than 20 mass%, as well as to suppress the phenomenon in which the hydrophilic microparticles fall off, which may occur in some cases when the hydrophilic microparticle content exceeds 80 mass%.

Although the thickness of the liquid-repellent layer is preferably 100 nm to 4000 nm, it need not be limited to this numerical range as long as the effects of the present invention can be obtained.

As the method for forming the liquid-repellent layer on the bumpy surface, it is possible to employ a method of preparing a dispersion in which hydrophilic microparticles are added to purified water beforehand, and thereafter applying the dispersion, adjusted by adding an aqueous dispersion of the fluorine-based resin copolymer at an arbitrary ratio, to the bumpy surface, using a coater or the like.

### [Second Embodiment]

Fig. 5 is a section view showing an example of a resin sheet according to the second embodiment. This resin sheet has a substrate layer 4, a sealant layer 3, a bumpy layer 1 and a liquid-repellent layer 2, laminated in the stated order. In other words, it is a resin sheet in which a sealant resin layer 3 is formed between the substrate layer 4 and the bumpy layer 1, on the surface of which the liquid-repellent layer 2 is laminated. The liquid-repellent layer and the bumpy layer are the same as those explained for the first embodiment, so their explanations will be omitted. However, the thickness of the bumpy layer is preferably 50 to 200 µm. If the thickness is less than 50 µm, there are cases in which the bumpy shape is not properly transferred. Additionally, if the thickness exceeds 200 µm, there are cases in which the production cost becomes expensive.

### (Substrate layer)

At least one or more substrate layers are provided on the surface of the bumpy layer other than the surface having the bumps. The substrate layer contains a resin selected from among styrene resins, olefin resins, polyester resins, nylon resins, ethylene-vinyl alcohol copolymer resins, acrylic resins such as polymethacrylic acid esters, and sealant resins. By being provided with a substrate layer, the resin sheet is provided with good oxygen barrier properties and weather resistance.

Examples of styrene resins include high-impact polystyrene and polybutadiene-polystyrene-polyacrylonitrile graft polymers. Examples of olefin resins include polyethylene and polypropylene. Examples of polyester resins include polyethylene terephthalate and polybutylene terephthalate. Examples of nylon resins include nylon-6 and nylon-66.

Examples of ethylene-vinyl alcohol copolymers include those obtained by saponification of ethylene-vinyl acetate copolymers, wherein the ethylene content is 10 to 65 mol% and preferably 20 to 50 mol%, and the degree of saponification is 90% or higher, preferably 95% or higher, in order to provide oxygen barrier properties, workability and moldability.

The sealant resin provides the adhesion between the bumpy layer and the substrate layer. Specific examples include hydrogenated styrene thermoplastic elastomers and modified olefin polymer resins.

Hydrogenated styrene thermoplastic elastomers are hydrogenated copolymers of styrene monomers and butadiene or isoprene, examples of which include hydrogenated styrene-butadiene-styrene block copolymers (styrene-ethylene/butylene-styrene block copolymers) and hydrogenated styrene-isoprene-styrene block copolymers (styrene-ethylene/propylene-styrene block copolymers), among which styrene-ethylene/butylene-styrene block copolymers are particularly preferred. Specifically, Dynaron 8601P, manufactured by JSR, and Tuftec P2000 and H1041, manufactured by Asahi Kasei, may be favorably used, and it is preferable for the composition ratio between the styrene and the ethylene/butylene to be within the range 12/88 to 67/33.

Representative examples of modified olefin polymer resins include olefin homopolymers having about 2 to 8 carbon atoms, such as ethylene, propylene and butene-1; olefin resins such as copolymers of said olefins with other olefins having 2 to 20 carbon atoms, such as ethylene, propylene, butene-1, 3-methylbutene-1, pentene-1, 4-methylpentene-1, hexene-1, octene-1 and decene-1, or with vinyl compounds such as vinyl acetate, vinyl chloride, acrylic acid, methacrylic acid, acrylic acid ester, methacrylic acid ester and styrene; and olefin rubbers such as ethylene-propylene copolymer, ethylene-propylene-diene copolymer, ethylene-butene-1 copolymer and propylene-butene-1 copolymer, modified under graft reaction conditions using an unsaturated carboxylic acid such as acrylic acid, methacrylic acid, crotonic acid, isocrotonic acid, maleic acid, fumaric acid, itaconic acid, citraconic acid or tetrahydrophthalic acid, or a derivative, such as an acid halide, an amide, an imide, an anhydride or an ester thereof, specific examples of which include malenyl chloride, maleimide, maleic anhydride, citraconic anhydride, monomethyl maleate, dimethyl maleate and glycidyl maleate.

Among the above, it is preferable to use an ethylene resin, a propylene resin or an ethylene-propylene or butene-1 copolymer rubber modified with an unsaturated dicarboxylic acid or an anhydride thereof, particularly maleic acid or an anhydride thereof.

It is possible to add to the substrate layer, as needed, additives within the range not interfering with the effects of the present invention, including colorants such as pigments and dyes, mold release agents such as silicone oils, fibrous reinforcing agents such as glass fibers, colorants such as talc, clay and silica, antistatic agents such as polyalkylene glycol and salt compounds containing sulfonic acid and alkali metals, ultraviolet absorption agents and antimicrobial agents. Additionally, it is possible to mix and use scrap resins that have been produced during the process of production of the multilayer resin sheet of the present invention.

The thickness of the substrate layer is not particularly limited, but may be 50 to 900 µm. When laminating two or more substrate layers, they may be laminated by coextrusion molding, by extrusion lamination molding using unstretched films or biaxially stretched films, or by dry lamination molding.

### (Sealant resin layer)

The sealant layer is provided between the bumpy layer and the substrate layer 4. The sealant resin layer provides adhesion between the bumpy layer and the substrate layer. The resin component constituting the sealant layer may be 100 mass% modified olefin polymer resins or the like.

Examples of modified olefin polymer resins include homopolymers of olefins having 2 to 8 carbon atoms, such as ethylene, propylene and butene-1; copolymers of homopolymers of said olefins with other olefins having 2 to 20 carbon atoms, such as ethylene, propylene, butene-1, 3-methylbutene-1, pentene-1, 4-methylpentene-1, hexene-1, octene-1 and decene-1, or with vinyl compounds such as vinyl acetate, vinyl chloride, acrylic acid, methacrylic acid, acrylic acid ester, methacrylic acid ester and styrene; and ethylene-propylene copolymer. Additionally, representative examples include olefin rubbers such as ethylene-propylene-diene copolymer, ethylene-butene-1 copolymer and propylene-butene-1 copolymer, modified by a graft reaction using an unsaturated carboxylic acid such as acrylic acid, methacrylic acid, crotonic acid, isocrotonic acid, maleic acid, fumaric acid, itaconic acid, citraconic acid or tetrahydrophthalic acid, or a derivative, such as an acid halide, an amide, an imide, an anhydride or an ester thereof, specific examples of which include malenyl chloride, maleimide, maleic anhydride, citraconic anhydride, monomethyl maleate, dimethyl maleate and glycidyl maleate.

Among the above, it is preferable to use an ethylene-propylene-diene copolymer or an ethylene-propylene or butene-1 copolymer rubber modified with an unsaturated dicarboxylic acid or an anhydride thereof, particularly maleic acid or an anhydride thereof.

The thickness of the sealant resin layer is preferably 20 µm to 90 µm, and more preferably 40 µm to 80 µm. If the thickness is less than 20 µm, there are cases in which interlayer peeling occurs between the bumpy layer and the substrate layer, and if the thickness exceeds 90 µm, there are cases in which the production cost becomes expensive.

### [Third embodiment]

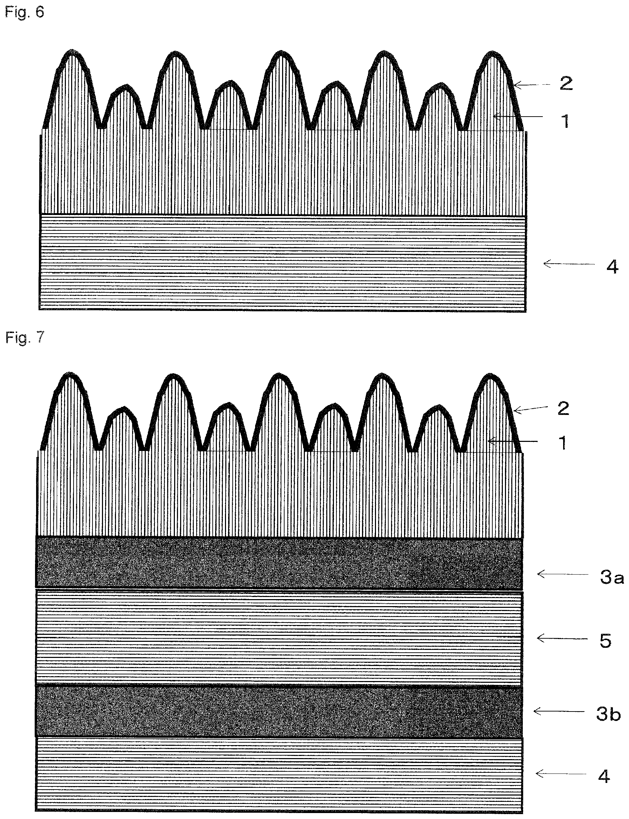

Fig. 6 is a resin sheet according to the third embodiment of the present invention. In this resin sheet, the bumpy layer 1 and the substrate layer 4 are directly laminated without using the sealant resin layer 3 indicated in the second embodiment. In other words, the layer structure of the resin sheet according to the third embodiment, from top to bottom, is liquid-repellent layer 2/bumpy layer 1/substrate layer 4, so the layer structure is that of the thermoplastic resin sheet according to the second embodiment, except without the sealant resin layer 3. The liquid-repellent layer and the bumpy layer are the same as the layers in the first embodiment and the second embodiment, so their explanations will be omitted. The substrate layer 4 in the present embodiment preferably has sufficient adhesion to the bumpy layer.

### (Substrate layer)

In the substrate layer, a styrene resin that has good adhesion to the bumpy layer is preferably used. The styrene substrate layer preferably contains, as the styrene resin, polystyrene resin at a concentration of 60 mass% to 15 mass%, more preferably 55 mass% to 15 mass%, and high-impact polystyrene resin at a concentration of 40 mass% to 85 mass%, more preferably 45 mass% to 85 mass%. Additionally, it is possible to use a styrene resin composition to which a hydrogenated styrene thermoplastic elastomer has been added. When combining the polystyrene resin with the hydrogenated styrene thermoplastic elastomer, the hydrogenated styrene thermoplastic elastomer should preferably be added at a concentration of 5 parts by mass to 10 parts by mass relative to 100 parts by mass of the polystyrene resin. In this case, if the hydrogenated styrene thermoplastic elastomer is added at a concentration less than 5 parts by mass, there are cases in which the adhesion to the bumpy layer is insufficient and interlayer peeling occurs, and if the concentration exceeds 10 parts by mass, there are cases in which the production cost becomes expensive.

### [Fourth embodiment]

Fig. 7 is a section view of a resin sheet according to the fourth embodiment of the present invention. This resin sheet is a resin sheet formed by laminating, in order, a liquid-repellent layer 2, a bumpy layer 1, a first sealant resin layer 3a, an oxygen barrier substrate layer 5, a second sealant resin layer 3b and a substrate layer 4. The first sealant resin layer 3a and the second sealant resin layer 3b may have the same or different compositions. The thickness of the bumpy layer is preferably 50 µm to 250 µm. If the thickness is less than 50 µm, there are cases in which the bumpy shape is not properly transferred. Additionally, if the thickness exceeds 200 µm, there are cases in which the production cost becomes expensive.

### (Substrate layer)

The substrate layer, as in the second embodiment, contains a resin selected from among styrene resins, olefin resins, polyester resins, nylon resins, ethylene-vinyl alcohol copolymer resins, acrylic resins such as polymethacrylic acid esters, and sealant resins. The substrate layer is preferably formed from a nylon resin. Examples of nylon resins include lactam polymers such as caprolactam and laurolactam; aminocarboxylic acid polymers such as 6-aminocaproic acid, 11-aminoundecanoic acid and 12-aminododecanoic acid; aliphatic diamines such as hexamethylenediamine, decamethylenediamine, dodecamethylenediamine and 2,2,4- or 2,4,4-trimethylhexamethylenediamine; alicyclic diamines such as 1,3- or 1,4-bis(aminomethyl)cyclohexane and bis(p-aminocyclohexylmethane); polycondensates of diamine units such as aromatic diamines such as m- or p-xylylenediamine with dicarboxylic acid units such as aliphatic dicarboxylic acids such as adipic acid, suberic acid and sebacic acid, alicyclic dicarboxylic acids such as cyclohexanedicarboxylic acid, and aromatic dicarboxylic acids such as terephthalic acid and isophthalic acid; and copolymers of the above. Specific examples include nylon-6, nylon-9, nylon-11, nylon-12, nylon-66, nylon-610, nylon-611, nylon-612, nylon-6T, nylon-6I, nylon-MXD6, nylon-6/66, nylon-6/610, nylon-6/6T and nylon-6I/6T, among which nylon-6 and nylon-MXD6 are preferred.

### (Oxygen barrier substrate layer)

The oxygen barrier substrate layer may, for example, be a layer containing an ethylene-vinyl alcohol copolymer resin or a nylon resin. Among these, it is preferable to use an ethylene-vinyl alcohol copolymer resin for the purpose of workability and moldability.

Ethylene-vinyl alcohol copolymer resins are normally obtained by saponification of ethylene-vinyl acetate copolymers, and the ethylene content should be 10 mol% to 65 mol%, preferably 20 mol% to 50 mol%, and the degree of saponification should be 90% or higher, preferably 95% or higher, in order to provide oxygen barrier properties, workability and moldability.

Additionally, examples of nylon resins include lactam polymers such as caprolactam and laurolactam; aminocarboxylic acid polymers such as 6-aminocaproic acid, 11-aminoundecanoic acid and 12-aminododecanoic acid; aliphatic diamines such as hexamethylenediamine, decamethylenediamine, dodecamethylenediamine and 2,2,4- or 2,4,4-trimethylhexamethylenediamine; alicyclic diamines such as 1,3- or 1,4-bis(aminomethyl)cyclohexane and bis(p-aminocyclohexylmethane); polycondensates of diamine units such as aromatic diamines such as m- or p-xylylenediamine with dicarboxylic acid units such as aliphatic dicarboxylic acids such as adipic acid, suberic acid and sebacic acid, alicyclic dicarboxylic acids such as cyclohexanedicarboxylic acid, and aromatic dicarboxylic acids such as terephthalic acid and isophthalic acid; and copolymers of the above.

Specific examples of nylon resins include nylon-6, nylon-9, nylon-11, nylon-12, nylon-66, nylon-610, nylon-611, nylon-612, nylon-6T, nylon-6I, nylon-MXD6, nylon-6/66, nylon-6/610, nylon-6/6T and nylon-6I/6T, among which nylon-6 and nylon-MXD6 are preferred. The thickness of the oxygen barrier layer is not particularly limited, but could be set to 10 µm to 60 µm.

### (Sealant resin layer)

The sealant resin layer preferably comprises a modified olefin polymer. Representative examples of the modified olefin polymer resin include homopolymers of olefins having 2 to 8 carbon atoms, such as ethylene, propylene and butene-1; olefin resins such as copolymers of homopolymers of said olefins with other olefins having 2 to 20 carbon atoms, such as ethylene, propylene, butene-1, 3-methylbutene-1, pentene-1, 4-methylpentene-1, hexene-1, octene-1 and decene-1, or with vinyl compounds such as vinyl acetate, vinyl chloride, acrylic acid, methacrylic acid, acrylic acid ester, methacrylic acid ester and styrene; and olefin rubbers such as ethylene-propylene copolymer, ethylene-propylene-diene copolymer, ethylene-butene-1 copolymer and propylene-butene-1 copolymer, modified under graft reaction conditions using an unsaturated carboxylic acid such as acrylic acid, methacrylic acid, crotonic acid, isocrotonic acid, maleic acid, fumaric acid, itaconic acid, citraconic acid or tetrahydrophthalic acid, or a derivative, such as an acid halide, an amide, an imide, an anhydride or an ester thereof, specific examples of which include malenyl chloride, maleimide, maleic anhydride, citraconic anhydride, monomethyl maleate, dimethyl maleate and glycidyl maleate.

Among the above, it is preferable to use an ethylene resin, a propylene resin or an ethylene-propylene or butene-1 copolymer rubber modified with an unsaturated dicarboxylic acid or an anhydride thereof, particularly maleic acid or an anhydride thereof.

The thickness of the sealant layer, on all sides, should preferably be 10 µm to 50 µm, and more preferably 20 µm to 40 µm. If the thickness is less than 10 µm, there are cases in which sufficient interlayer adhesive strength is not obtained, and if the thickness exceeds 50 µm, there are cases in which the production cost becomes expensive.

### (Liquid-repellent resin sheet)

The above-mentioned liquid-repellent resin sheet has a surface that is liquid-repellent with respect to water-based liquids, oil-based liquids and surfactant-based liquids, and thus can prevent the adherence of these liquids. For this reason, the liquid-repellent resin sheet of the present invention can be favorably used in a building material such as a wallpaper material, a kitchen/bathroom material, a lid material for a food product container, a pouch material, or a daily-use article such as a raincoat or an umbrella.

"Liquid repellency" refers to the property wherein the contact angle between the surface of the resin sheet and a liquid is large, and the sliding angle of the liquid is small, to a degree sufficient to prevent the adherence of water-based, oil-based or surfactant-based liquids to the resin sheet. Specifically, it means that the contact angles of water-based, oil-based or surfactant-based liquids on the resin sheets are all 130° or more, and the sliding angles of the liquids are 40° or less. Additionally, a "water-based liquid" refers to a liquid having water as the solvent, an "oil-based liquid" refers to a liquid having organic compounds dispersed in a water-based liquid or a liquid having organic matter as the solvent, and a "surfactant-based liquid" refers to a liquid having a surfactant dispersed in a water-based liquid or an oil-based liquid.

### [Liquid-repellent resin sheet production method]

The resin sheet production method according to the present invention is not limited and may be any method, but will typically include steps for producing a single-layer sheet having bumps of at least one type on one surface thereof or a laminated resin sheet including said bumpy layer, and finally forming a liquid-repellent layer on the bumpy surface.

First, when producing the single-layer sheet having bumps of at least one type on one surface thereof or a laminated resin sheet including said bumpy layer, it is possible to use any resin sheet formation method. For example, the method may involve using a single single-screw extruder in the case of a single layer, and using multiple single-screw extruders in the case of multiple layers, to melt-extrude various raw material resins, and using a T-die to obtain a resin sheet. In the case of a multilayer structure, a multimanifold die may be used. While the layer structures of the embodiments of the resin sheet of the present invention are basically as mentioned above, it is also possible to add, to the substrate layer, scrap material that has been generated during the process of producing a molded container or the resin sheet of the present invention, as long as no deterioration of the physical properties or the like is observed, and to laminate the material as a further layer.

Next, bumps are formed on the single-layer or multilayer resin sheet, but this method is also not particularly limited, and any method known to those skilled in the art may be used. For example, the bumps may be formed by means of a method of production by extrusion molding, a method of production by photolithograpy, a method of production by hot-pressing, or a method of production by using a patterned roller and a UV-curable resin.

Finally, a liquid-repellent layer is formed on the surface of the bumpy layer. The method for forming the liquid-repellent layer is not particularly limited, and a generally known coating method such as, for example, roll coating, gravure coating, bar coating, doctor blade coating, brush coating or electrostatic powder coating may be employed. Additionally, the solvent that is used when preparing the coating solution is also not particularly limited as long as the dispersion properties are not affected, and aside from water, it is possible to select an appropriate organic solvent such as, for example, an alcohol (ethanol), cyclohexane, toluene, acetone IPA, propylene glycol, hexylene glycol, butylene glycol, pentamethylene glycol, normal pentane, normal hexane and hexyl alcohol. In this case, it is also possible to combine small quantities of dispersants, colorants, anti-settling agents, viscosity adjusters and the like.

The resin sheet according to the present invention has a liquid-repellent layer on the bumps on the bumpy layer, and the liquid repellency due to the microscopic bumpy shape and the liquid-repellent layer act together to exhibit excellent liquid repellency. In other words, in the resin sheet of the present invention, as mentioned above, the contact angle of liquids is 130° or more, so the liquid repellency is sufficient and the liquid slides across the resin sheet. If the contact angle is less than 130°, there are cases in which the liquid does not slide over the resin sheet, and the resin sheet cannot be considered to have liquid repellency.

Additionally, in the thermoplastic resin sheet according to the present invention, the sliding angle of liquids is preferably 40° or less. If the sliding angle exceeds 40°, there are cases in which the liquid does not slide.

### <Article>

The liquid-repellent resin sheet according to the present invention can be applied to the aforementioned uses requiring liquid repellency. For example, the liquid-repellent resin sheet of the present invention can be applied to a building material such as a wallpaper material; a kitchen/bathroom material for use in kitchens, bathrooms or lavatories; a daily-use article such as a raincoat or an umbrella; or a packaging material such as a food product container or a pouch.

The building material may, for example, be an interior decoration material in which the above-mentioned resin sheet is affixed to a generally known interior decoration material such as wallpaper (for example, JP 2010-222779 A). By affixing the resin sheet, it is possible to form an interior decoration material to which stains such as oil stains do not tend to adhere. The material of the resin sheet to be affixed is preferably a fluorine-based resin in consideration of weather resistance. The method for affixing the resin sheet to the interior decoration material is not particularly limited.

The kitchen/bathroom material may, for example, be a bathroom wall panel in which the resin sheet of the present invention is affixed to a generally known bathroom wall panel (for example, JP 2010-1716 A). By affixing the resin sheet, it is possible to form a bathroom wall panel to which water droplets do not tend to adhere. The material of the resin sheet to be affixed is preferably an olefin resin or a fluorine-based resin. The method for affixing the resin sheet to the kitchen/bathroom material is not particularly limited.

The daily-use article may be rain gear such as a raincoat, an umbrella or a rain poncho produced by a generally known method using a resin sheet. By using a resin sheet to produce the rain gear, it is possible to form rain gear to which water droplets do not tend to adhere, and for which water droplets do not tend to adhere to the hands when the rain gear is being folded. As the material of the resin sheet when used in rain gear such as a raincoat, an umbrella or a rain poncho, it is preferable to use an olefin resin in consideration of the workability for sewing and fixation or the like.

The packaging material may, for example, be a lid material for a food product container in which the resin sheet of the present invention is employed as a sealant layer on a generally known lid material for a food product container (for example, JP 2007-246122 A), or a pouch material in which the sheet of the present invention is employed as the innermost layer of a generally known pouch (for example, JP 5436128 B). By having a layer including the resin sheet, the effect in which the contents of the respective packages do not tend to adhere is obtained. The material of the resin sheet used as the innermost layer of the pouch is preferably an olefin resin in consideration of the workability for lamination with other materials and the like.

### EXAMPLES

Hereinbelow, the present invention will be specifically explained by providing examples and comparative examples. However, the present invention is not limited in any way by the content of the examples and the like.

The various raw materials used in the examples and the like are the following.
(1) Bumpy layer
   (A-1) Random polypropylene "PM921V" (manufactured by SunAllomer)
   (A-2) Block polypropylene "PM854X" (manufactured by SunAllomer)
   (B-1) Linear medium-density polyethylene (C4) "Neozex 45200" (manufactured by Prime Polymer)
   (B-2) Linear low-density polyethylene (C6) "Ultzex 20200J" (manufactured by Prime Polymer)
   (C) Styrene-conjugated diene block copolymer resin "730L" (manufactured by Denka) (diene content 25 mass%)
   (D) GPPS "G100C" (manufactured by Toyo Styrene)
   (E) PVDF "Kynar 720" (manufactured by Arkema)
   (F) Polyvinyl chloride "BFV7070N" (manufactured by Riken Technos)
   (G) Polyethylene terephthalate "TRN-8580FC" (manufactured by Teijin)
   (H) Amorphous polyalfa-olefin "RT2880A" (manufactured by KF Chemicals)
(2) Liquid-repellent layer
   (I) Hydrophilic microparticles: silanol group-containing hydrophilic silica "Aerosil 300" (manufactured by Nippon Aerosil), average primary particle size 7 nm
   (J-1) Fluorine-based copolymer: "AG-E070" (manufactured by Asahi Glass) (fluoroacrylate copolymer)
   (J-2) Fluorine-based copolymer: "AG-E550D" (manufactured by Asahi Glass) (fluoroacrylate copolymer)
(3) Sealant resin layer
   (K) Hydrogenated styrene thermoplastic elastomer "Tuftec P2000" (manufactured by Asahi Kasei)
   (L) Hydrogenated styrene thermoplastic elastomer "Tuftec M1943" (manufactured by Asahi Kasei)
   (M) Modified olefin polymer "Modic F502" (manufactured by Mitsubishi Chemical) (modified polyolefin)
   (N) Modified olefin polymer "Admer SE810" (manufactured by Mitsui Chemicals) (modified polyolefin)
(4) Substrate layer
   (O) Hydrogenated styrene thermoplastic elastomer "Tuftec P2000" (manufactured by Asahi Kasei)
   (P) HIPS "Toyostyrol H850N" (manufactured by Toyo Styrene, butadiene content 9.0 mass%)
   (Q) GPPS resin "HRM23" (manufactured by Toyo Styrene)
   (R) PET resin (film) "Ester Film E5102: 16 µm" (manufactured by Toyobo)
   (S) Nylon-6 resin (film) "Harden Film N1100: 15 µm" (manufactured by Toyobo)
   (T) Ethylene-vinyl alcohol copolymer "Eval J-171B" (manufactured by Kuraray)
   (U) Acrylic (PMMA) resin "HBS000" (manufactured by Mitsubishi Chemical)

The following methods were used to evaluate the various properties of the resin sheets produced in the examples and the like.

### (1) Bump observation

A VK-X100 laser microscope (manufactured by Keyence) was used to measure the bump height, the bump top spacing and the bump bottom diameter (diagonal distance). Additionally, in order to measure the bump height, the bump top spacing and the bump bottom diameter (diagonal distance), a bump section sample was produced using a microtome. The bump height was obtained by measuring the heights of 10 bumps of the same shape at three arbitrary locations on a resin sheet, and taking the arithmetic mean of the 30 measured values. When there were two or more types of bumps, the heights of the first bumps and the second bumps were determined by using a similar method for each type. The top spacing was obtained by measuring the top spacing between 10 adjacent bumps at three arbitrary locations on a resin sheet, and taking the arithmetic mean of the 30 measured values. When there were two or more types of bumps, the top spacings of the first bumps and the second bumps were measured, and the arithmetic means of the 30 measured values were used. The aspect ratio of the bumps was calculated as bump height/bump bottom diameter (diagonal distance) using the values of the bump height and the bottom diameter (diagonal distance) measured in the above manner.

### (2) Contact angle and sliding angle

The contact angle and the sliding angle were measured for the resin sheets by using a DM-501 automatic contact angle meter (manufactured by Kyowa Interface Science). Additionally, as the test solutions, purified water, salad oil (Nisshin OilliO) and the liquid detergent "Attack NeO" (manufactured by Kao) were used, and the dropped amounts were set to 6 µL for contact angle measurement and 20 µL for sliding angle measurement. If the contact angle is 130° or more, it can be judged that the liquid repellency is high and the adherence of liquids can be prevented. Additionally, if the sliding angle is 40° or less, it can be judged that the liquid repellency is high and the adherence of liquids can be prevented.

### (3) Sealability evaluation

The flange portions of a container vacuum-molded by using a single-layer sheet (900 µm thick) of high-impact polystyrene were cut away, and a heat seal was made using a heat seal tester (manufactured by Sagawa Manufacturing). A heat seal tester having a sealing iron width of 1.0 mm was used, and the resin sheet that was produced was used as a lid material. The sealing temperature was 210 °C and the sealing pressure was 0.36 MPa. Additionally, the peel strength was measured using a VE1D strograph (manufactured by Toyoseiki). The measurement was made by clamping the lid material (resin sheet) in one chuck of the strograph and clamping a flange of the container in the other chuck. The peel rate was 200 mm/min. It can be judged that the sealability is good if the peel strength is 2.8 N or higher.

Additionally, the above-mentioned heat seal tester (Sagawa Manufacturing) was used to produce a pouch so that the bumpy layer of the produced sheet was on the inner surface. The seal temperature was 210 °C, the seal pressure was 0.36 MPa and the sealing iron width was 5 mm. The peel strength was measured by using a VE1D strograph (manufactured by Toyoseiki), by clamping the resin sheets in the chucks of the strograph. The peel rate was 200 mm/min. It can be judged that the sealability is good if the peel strength is 8.5 N or higher.

### (4) Measurement of melt mass-flow rate (MFR)

The melt mass-flow rate was measured in compliance with the JIS K 7210 and ASTM D 1238 standards, using a testing temperature of 190 °C and a load of 2.16 kg for olefin resins and vinyl chloride resins, a testing temperature of 200 °C and a load of 5.00 kg for PS resins, a testing temperature of 230 °C and a load of 5.0 kg for fluorine-based resins, and a testing temperature of 280 °C and a load of 1.2 kg for PET resins. As the testing equipment, an F-F01 Melt Indexer (manufactured by Toyoseiki) was used.

### (5) Oxygen transmission rate

The oxygen transmission rate of the resin sheet was measured using an OX-TRAN oxygen transmission rate measuring device (manufactured by Mocon), under measurement conditions in which the temperature was 25 °C and the relative humidity was 65%, in compliance with the JIS K7126-B standard. The oxygen barrier properties can be considered to be good if the oxygen transmission rate is less than 3.0 ml/m²·day·atm.

### <Example 1 (Fig. 1 layer structure)>

A single 65 mm single-screw extruder was used to extrude a resin sheet by means of T-die extrusion. This extruded sheet was cast using a transfer roller, on the surface of which a bumpy shape was formed by means of laser engraving, and a touch roller, resulting in a resin sheet having only a bumpy layer having a bumpy shape formed on the front surface thereof.

Next, in order to form a liquid-repellent layer on the surface of the bumpy layer on which the bumpy shape was formed, a dispersion (with purified water as the solvent) in which hydrophilic silica and a fluorine-based copolymer resin were mixed so that the concentration of the hydrophilic silica in the liquid-repellent layer would be 66 mass% and the concentration of the fluorine-based copolymer resin would be 34 mass% was produced. This mixed dispersion was coated onto the corona-treated surface of the bumpy layer using a bar coater, then dried at 90 °C to 150 °C to form a liquid-repellent layer.

The composition of the resin sheet having a liquid-repellent layer formed on the surface of the bumpy layer on which the bumpy shape was formed is shown in Table 1. The thicknesses of the liquid-repellent layers are the wet thicknesses, and the thicknesses of the liquid-repellent layers after being dried are shown in parentheses. Additionally, various properties of the resin sheet produced as described above were evaluated by the aforementioned methods. The results are shown in Table 2.

### [Table 1]

**[Table 1]**

| | | Bumpy Layer | | | | | | | | | | Liquid-repellent Layer | | |
|---|---|---|---|---|---|---|---|---|---|---|---|---|---|---|
| | | (A-1) Random polypropylene | (A-2) Block polypropylene | (B-1) Polyethylene resin | (B-2) Polyethylene resin | (C)Styrene-conjugated diene block copolymer resin | (D) GPPS resin | (F) Poly vinyl chloride | (G) Polyethylene terephthalate | (H) Amorphous poly-alphaolefin | MFR (g/10 min) | (1) Hydrophilic silica | (J-1) Fluorine based copolymer resin | (J-2) Fluorine based copolymer resin |
| Example 1 | Composition (mass%) | 100 | - | - | - | - | - | - | - | - | 25.0 | 66 | 34 | - |
| | Sheet thickness (µm) | 500 | | | | | | | | | | Coating thickness: 12 (720 nm) | | |
| Example 2 | Composition (mass%) | - | 100 | - | - | - | - | - | - | - | 20.0 | 55 | - | 45 |
| | Sheet thickness (µm) | 450 | | | | | | | | | | Coating thickness: 12 (648 nm) | | |
| Example 3 | Composition (mass%) | - | - | - | - | - | - | - | - | 100 | 5.4 | 63 | - | 37 |
| | Sheet thickness (µm) | 600 | | | | | | | | | | Coating thickness: 12 (768 nm) | | |
| Example 4 | Composition (mass%) | - | - | - | - | - | - | - | 100 | - | 28.6 | 66 | 34 | - |
| | Sheet thickness (µm) | 500 | | | | | | | | | | Coating thickness: 24 (1440 nm) | | |
| Example 5 | Composition (mass%) | - | - | 50 | - | - | 50 | - | - | - | 24.0 | 45 | - | 55 |
| | Sheet thickness (µm) | 500 | | | | | | | | | | Coating thickness: 24 (1056 nm) | | |
| Example 6 | Composition (mass%) | - | - | - | - | - | - | 100 | - | - | 6.8 | 50 | 50 | - |
| | Sheet thickness (µm) | 600 | | | | | | | | | | Coating thickness: 12 (600 nm) | | |
| Example 7 | Composition (mass%) | 50 | - | 50 | - | - | - | - | - | - | 22.5 | 33 | 67 | - |
| | Sheet thickness (µm) | 500 | | | | | | | | | | Coating thickness: 24 (720 nm) | | |
| Example 8 | Composition (mass%) | - | - | - | - | - | - | - | 100 | - | 28.6 | 74 | - | 26 |
| | Sheet thickness (µm) | 500 | | | | | | | | | | Coaling thickness: 24 (2256 nm) | | |
| Example 9 | Composition (mass%) | - | - | - | - | - | - | 100 | - | - | 6.8 | 63 | - | 37 |
| | Sheet thickness (µm) | 700 | | | | | | | | | | Coating thickness: 12 (768 nm) | | |
| Example 10 | Composition (mass%) | 90 | - | 10 | - | - | - | - | - | - | 24.5 | 60 | 40 | - |
| | Sheet thickness (µm) | 800 | | | | | | | | | | Coating thickness: 12 (768 nm) | | |
| Example 11 | Composition (mass%) | - | - | 100 | - | - | - | - | - | - | 20.0 | 45 | - | 55 |
| | Sheet thickness (µm) | 500 | | | | | | | | | | Coating thickness: 12 (528 nm) | | |
| Example 12 | Composition (mass%) | - | 100 | - | - | - | - | - | - | - | 20.0 | 66 | 34 | - |
| | Sheet thickness (µm) | 500 | | | | | | | | | | Coating thickness: 12 (768 nm) | | |
| Comparative Example 1 | Composition (mass%) | - | 80 | - | - | - | 20 | - | - | - | 21.6 | - | - | - |
| | Layer thickness (µm) | 550 | | | | | | | | | | | | |
| Comparative Example 2 | Composition (mass%) | 20 | - | - | - | 80 | - | - | - | - | 11.2 | 63 | - | 37 |
| | Layer thickness (µm) | 500 | | | | | | | | | | Coating thickness: 12 (768 nm) | | |
| Comparative Example 3 | Composition (mass%) | 100 | - | - | - | - | | | | - | 25.0 | | | 100 |
| | Layer thickness (µm) | 500 | | | | | | | | | | Coating thickness: 12 (3600 nm) | | |
| Comparative Example 4 | Composition (mass%) | - | - | 80 | - | 20 | - | - | - | - | 17.6 | 66 | 34 | - |
| | Layer thickness (µm) | 600 | | | | | | | | | | Coating thickness: 12 (720 nm) | | |
| Comparative Example 5 | Composition (mass%) | - | 80 | - | - | - | 20 | - | - | - | 21.6 | 100 | - | - |
| | Layer thickness (µm) | 500 | | | | | | | | | | Coating thickness: 24 (960 nm) | | |

### [Table 2]

**[Table 2]**

| | Thermoplastic Resin Sheet Evaluation | | | | | | | | | | | | | |
|---|---|---|---|---|---|---|---|---|---|---|---|---|---|---|
| | First bump height (µm) | First bump bottom diameter (µm) | Second bump height (µm) | Second bump bottom diameter (µm) | Bump top spacing (µm) | Aspect ratio (bump A height/ bump A diameter) | Aspect ratio (bump B height/ bump B diameter) | Bump arrangement | Contact angle (°) | Sliding angle (°) | Contact angle (°) | Sliding angle (°) | Contact angle (°) | Sliding angle (°) |
| | | | | | | | | | Purified water | Purified water | Salad oil | Salad oil | Liquid detergent | Liquid detergent |
| Example 1 | 63 | 56 | 26 | 28 | 57 | 1.13 | 0.93 | staggered | 155 | 15 | 146 | 10 | 150 | 12 |
| Example 2 | 78 | 50 | 35 | 36 | 67 | 1.56 | 0.97 | staggered | 155 | 15 | 146 | 10 | 151 | 11 |
| Example 3 | 71 | 75 | - | - | 71 | 0.95 | - | staggered | 153 | 16 | 144 | 14 | 146 | 15 |
| Example 4 | 64 | 75 | - | - | 74 | 0.85 | - | staggered | 152 | 18 | 142 | 15 | 147 | 14 |
| Example 5 | 66 | 73 | - | - | 73 | 0.90 | - | staggered | 155 | 17 | 144 | 14 | 146 | 15 |
| Example 6 | 65 | 74 | - | - | 70 | 0.88 | - | staggered | 155 | 17 | 144 | 14 | 146 | 15 |
| Example 7 | 89 | 82 | - | - | 75 | 1.09 | - | staggered | 152 | 18 | 142 | 15 | 147 | 14 |
| Example 8 | 24 | 25 | - | - | 24 | 0.96 | - | staggered | 152 | 24 | 142 | 25 | 147 | 14 |
| Example 9 | 55 | 75 | - | - | 71 | 0.73 | - | staggered | 152 | 18 | 140 | 29 | 141 | 18 |
| Example 10 | 130 | 71 | - | - | 65 | 1.83 | - | staggered | 152 | 18 | 140 | 28 | 143 | 19 |
| Example 11 | 82 | 56 | 40 | 37 | 58 | 1.46 | 1.08 | staggered | 155 | 15 | 146 | 20 | 150 | 12 |
| Example 12 | 72 | 52 | 33 | 35 | 60 | 1.38 | 0.94 | staggered | 155 | 15 | 146 | 20 | 151 | 11 |
| Comparative Example 1 | 64 | 75 | - | - | 74 | 0.85 | - | staggered | 135 | 45 | 105 | no sliding | 70 | no sliding |
| Comparative Example 2 | no bumps formed | | | | | | | | 150 | 10 | 55 | no sliding | 45 | no sliding |
| Comparative Example 3 | 89 | 82 | - | - | 75 | 1.09 | - | staggered | 141 | 30 | 120 | no sliding | 114 | no sliding |
| Comparative Example 4 | 20 | 45 | - | - | 73 | 0.44 | - | staggered | 145 | 20 | 100 | no sliding | 95 | no sliding |
| Comparative Example 5 | 55 | 75 | - | - | 71 | 0.73 | - | staggered | 45 | no sliding | 99 | no sliding | 30 | no sliding |

### <Examples 2 to 12 and Comparative Examples 1 to 5>

Resin sheets according to Examples 2, 5, 7 and 10 to 12, and Comparative Examples 1 to 5 were produced in the same manner as in Example 1, except that the compositions, thicknesses and MFR of the bumpy layer and the liquid-repellent layer were set as shown in Table 1, and the resin sheets were evaluated. In Examples 3, 4, 6, 8 and 9, the resin sheets were produced by hot-pressing. The results are shown in Table 2.

In Comparative Example 1, a liquid-repellent layer was not formed, and in Comparative Example 2, a bumpy shape was not formed. In Comparative Example 3, hydrophilic silica was not included, and in Comparative Example 4, the aspect ratio of the bumps was low. In Comparative Example 5, a fluorine-based copolymer resin was not used.

The following matters became clear from the results shown in Table 2. In all of Examples 1 to 12, the sheets obtained results satisfying all of the evaluation criteria relating to liquid repellency (contact angle and sliding angle) for each liquid. In contrast therewith, in Comparative Examples 1 to 5, the liquids other than purified water or all of the liquids did not slide on the sheet.

### <Example 13 (Fig. 5 layer structure)>

Two 40 mm single-screw extruders were used to laminate a bumpy layer and a sealant layer by means of feedblock extrusion, after which the bumpy layer and the sealant layer were laminated onto a PET resin film by means of extrusion lamination, resulting in a multilayer resin sheet having a bumpy layer/sealant resin layer/substrate layer (PET resin) layer structure.

The multilayer resin sheet obtained as described above was cast using a transfer roller, on the surface of which a bumpy shape was formed by means of laser engraving, and a touch roller, resulting in a multilayer resin sheet having a bumpy shape formed on the surface on the side having the bumpy layer.

Next, in order to form a liquid-repellent layer on the surface of the bumpy layer on which the bumpy shape was formed, a dispersion (with purified water as the solvent) in which hydrophilic silica and a fluorine-based copolymer resin were mixed so that the concentration of the hydrophilic silica would be 66 mass% and the concentration of the fluorine-based copolymer resin would be 34 mass% was produced. This mixed dispersion was coated, using a bar coater, onto the corona-treated surface of the bumpy layer on which the bumpy shape was formed, then dried at 90 °C to 150 °C to form a liquid-repellent layer. The compositions and the thicknesses of the layers of the resin sheet having a liquid-repellent layer formed on the surface of the bumpy layer on which the bumpy shape was formed are shown in Table 3 (the numerical values in parentheses regarding the liquid-repellent layers indicate the thicknesses of the liquid-repellent layers after drying). Additionally, various properties of the resin sheet produced as described above were evaluated by the aforementioned methods. The results are shown in Table 4.

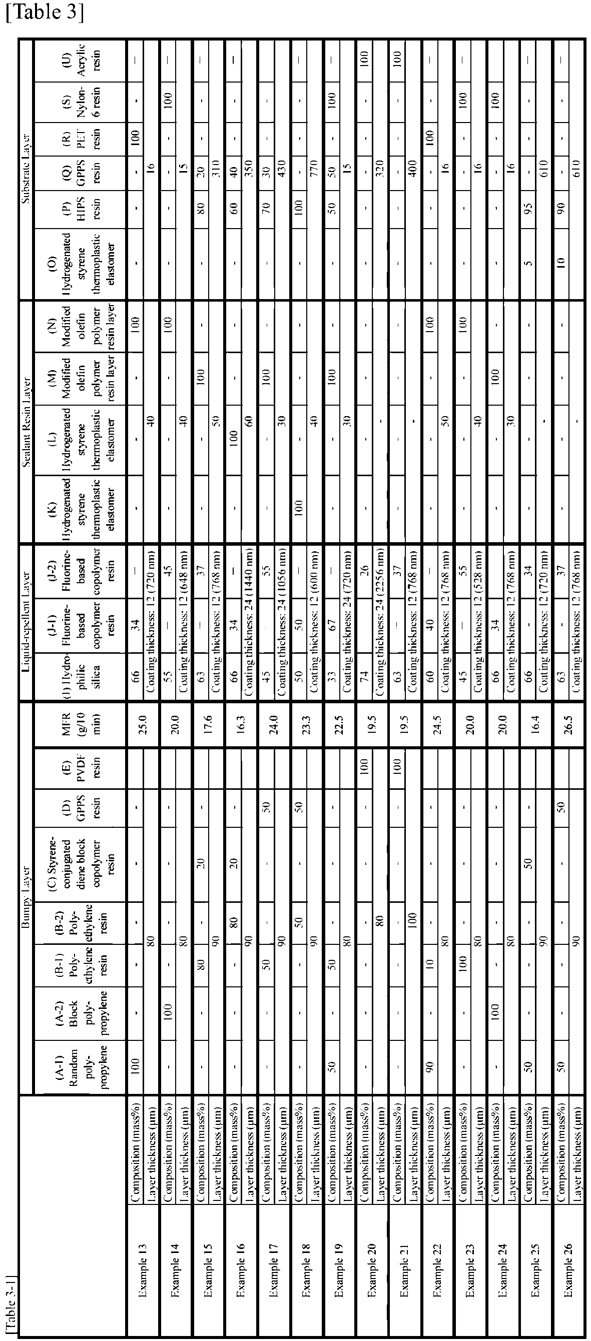

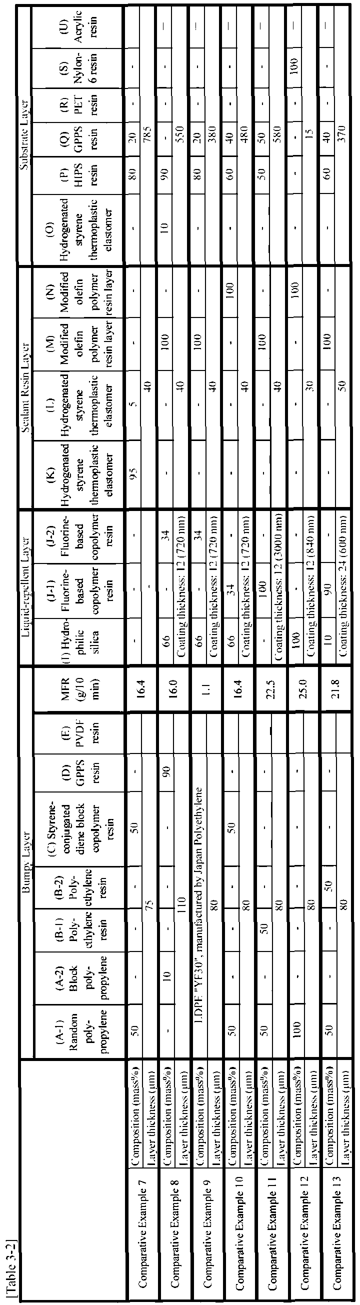

### [Table 4]

**[Table 4]**

| | Thermoplastic Resin Sheet Evaluation | | | | | | | | | | | | | | | |
|---|---|---|---|---|---|---|---|---|---|---|---|---|---|---|---|---|
| | Bump A height (µm) | Bump A bottom diameter (µm) | Bump B height (µm) | Bump B bottom diameter (µm) | Bump top spacing (µm) | Aspect ratio (bump A height/bump A diameter | Aspect ratio (bump B height/bump B diameter | Bump arrangement | Contact angle (°) | Sliding angle (°) | Contact angle (°) | Sliding angle (°) | Contact angle (°) | Sliding angle (°) | Sealability evaluation (container) peel strength (N) | Sealability evaluation (pouch) peel strength (N) |
| | | | | | | | | | Purified water | Purified water | Salad oil | Salad oil | Liquid detergent | Liquid detergent | | |
| Example 13 | 63 | 56 | 26 | 28 | 57 | 1.13 | 0.93 | staggered | 155 | 15 | 146 | 15 | 150 | 22 | 3.6 | 11 |
| Example 14 | 78 | 50 | 35 | 36 | 67 | 1.56 | 0.97 | staggered | 155 | 15 | 146 | 15 | 151 | 21 | 3.5 | 11 |
| Example 15 | 71 | 75 | - | - | 71 | 0.95 | - | staggered | 153 | 16 | 144 | 19 | 146 | 25 | - | - |
| Example 16 | 64 | 75 | - | - | 74 | 0.85 | - | staggered | 152 | 18 | 142 | 20 | 147 | 24 | - | - |
| Example 17 | 66 | 73 | - | - | 73 | 0.90 | - | staggered | 155 | 17 | 144 | 19 | 146 | 25 | - | - |
| Example 18 | 65 | 74 | - | - | 70 | 0.88 | - | staggered | 155 | 17 | 144 | 19 | 146 | 25 | - | - |
| Example 19 | 65 | 51 | - | - | 75 | 1.27 | - | staggered | 151 | 19 | 142 | 22 | 147 | 24 | 3.5 | 11 |
| Example 20 | 24 | 25 | - | - | 24 | 0.96 | - | staggered | 152 | 18 | 142 | 20 | 147 | 24 | - | - |
| Example 21 | 55 | 75 | - | - | 71 | 0.73 | - | staggered | 152 | 18 | 140 | 24 | 141 | 28 | - | - |
| Example 22 | 130 | 71 | - | - | 65 | 1.83 | - | staggered | 152 | 18 | 140 | 23 | 143 | 29 | 3.4 | 11 |
| Example 23 | 82 | 56 | 40 | 37 | 58 | 1.46 | 1.08 | staggered | 155 | 15 | 146 | 15 | 150 | 22 | 3.5 | 11 |
| Example 24 | 72 | 52 | 33 | 35 | 60 | 1.38 | 0.94 | staggered | 155 | 15 | 146 | 15 | 151 | 21 | 3.4 | 11 |
| Example 25 | 65 | 74 | - | - | 70 | 0.88 | - | staggered | 152 | 18 | 142 | 20 | 147 | 24 | - | - |
| Example 26 | 65 | 74 | - | - | 70 | 0.88 | - | staggered | 152 | 18 | 142 | 20 | 147 | 24 | - | - |
| Comparative Example 7 | 65 | 74 | - | - | 70 | 0.88 | - | staggered | 135 | 45 | 106 | no sliding | 76 | no sliding | - | - |
| Comparative Example 8 | no bumps formed | | | | | | | | 150 | 10 | 55 | no sliding | 45 | no sliding | - | - |
| Comparative Example 9 | 30 | 72 | - | - | 71 | 0.42 | - | staggered | 135 | 40 | 99 | no sliding | 55 | no sliding | - | - |
| Comparative Example 10 | 10 | 40 | - | - | 35 | 0.25 | - | staggered | 130 | 30 | 65 | no sliding | 40 | no sliding | - | - |
| Comparative Example 11 | 65 | 74 | - | - | 70 | 0.88 | - | staggered | 141 | 30 | 115 | no sliding | 104 | no sliding | - | - |
| Comparative Example 12 | 65 | 51 | - | - | 75 | 1.27 | - | staggered | 155 | 5 | 20 | no sliding | 30 | no sliding | 3.7 | 10 |
| Comparative Example 13 | 55 | 75 | - | - | 71 | 0.73 | - | staggered | 143 | 28 | 122 | no sliding | 112 | no sliding | - | - |

### <Examples 14 to 19, 22 to 24, and Comparative Examples 7 to 13>

The resin sheets according to Examples 13, 14, 19 and 22 to 24, and Comparative Example 12 were produced in the same manner as in Example 13, except that the compositions, thicknesses and MFR of the layers were set as shown in Table 3. The resin sheets according to Examples 15 to 18 and Comparative Examples 7 to 11 and 13 were produced in the same manner as in Example 13, except that three 40 mm single-screw extruders were used to obtain multilayer resin sheets formed by laminating, in order, a bumpy layer/sealant resin layer/substrate layer structure by means of feedblock extrusion, and the compositions, thicknesses and MFR of the layers were set as shown in Table 3. The resin sheets according to Examples 14 to 19 and 22 to 24, and Comparative Examples 7 to 13 were produced as above and the results are shown in Table 4. Additionally, in Examples 13, 14, 19 and 22 to 24, and Comparative Example 12, the sealability was evaluated.

In Comparative Example 7, a liquid-repellent layer was not formed; in Comparative Example 8, a bumpy shape was not formed; in Comparative Example 9, polyethylene having an MFR of 1.1 g/10 min was used in the bumpy layer, so the transferability was poor and the aspect ratio of the bumps was low; in Comparative Example 10, the aspect ratio of the bumps was low. In Comparative Example 11, only a fluorine-based copolymer resin was used in the liquid-repellent layer, and in Comparative Example 12, only hydrophilic silica was used in the liquid-repellent layer. In Comparative Example 13, the aspect ratio of the bumps was high.

The following matters became clear from the results shown in Table 4. In all of Examples 13 to 26, the sheets obtained results satisfying all of the evaluation criteria relating to sealability (examples 13, 14, 19, 22, 23 and 24) and liquid repellency (contact angle and sliding angle) for each liquid. In contrast therewith, in Comparative Examples 7 to 13, the liquids other than purified water did not slide on the sheet.

### <Example 20 (Fig. 6 layer structure)>

Two 40 mm single-screw extruders were used to extrude a multilayer resin sheet having a bumpy layer/acrylic resin substrate layer structure by means of feedblock extrusion using a T-die. On the extruded sheet obtained as described above, a bumpy shape was formed on the surface on the side having the bumpy layer in the same manner as in Example 13, then the liquid-repellent layer shown in Table 3 was formed on the surface of the bumpy layer on which the bumpy shape was formed. The compositions and thicknesses of the layers of the resin sheet having a liquid-repellent layer formed on the surface of the bumpy layer on which the bumpy shape was formed are shown in Table 3 (the numerical values in parentheses regarding the liquid-repellent layers indicate the thicknesses of the liquid-repellent layers after drying). Additionally, evaluation tests similar to those for Example 13 were performed on the resin sheet produced as described above. The results are also shown in Table 4.

### <Examples 21, 25 and 26>

Resin sheets according to Examples 21, 25 and 26 were produced in the same manner as in Example 20, except that the compositions, thicknesses and MFR of the bumpy layer, the liquid-repellent layer and the substrate layer were set as shown in Table 3. Evaluation results of the properties thereof are shown in Table 4.

The following matters became clear from the results shown in Table 4. In Examples 20, 21, 25 and 26, the sheets obtained results satisfying all of the evaluation criteria relating to liquid repellency (contact angle and sliding angle) for each liquid.

### <Example 27 (Fig. 7 layer structure)>

Four 40 mm single-screw extruders were used to obtain a multilayer resin sheet having a bumpy layer/first sealant resin layer/oxygen barrier substrate layer/second sealant resin layer/substrate layer (PET resin) structure by laminating, in order, a bumpy layer/first sealant resin layer (modified olefin polymer resin layer)/oxygen barrier substrate layer (ethylene-vinyl alcohol copolymer resin layer)/second sealant resin layer (modified olefin polymer resin layer) structure, by means of feedblock extrusion, and thereafter laminating the structure onto a PET resin film by means of extrusion lamination.

The multilayer resin sheet obtained as described above was cast using a transfer roller, on the surface of which a bumpy shape was formed by means of laser engraving, and a touch roller, resulting in a multilayer resin sheet having a bumpy shape formed on the surface on the side having the bumpy layer.

Next, in order to form a liquid-repellent layer on the surface of the bumpy layer on which the bumpy shape was formed, a dispersion (with purified water as the solvent) in which hydrophilic silica and a fluorine-based copolymer resin were mixed so that the concentration of the hydrophilic silica would be 66 mass% and the concentration of the fluorine-based copolymer resin would 34 mass% was produced. This mixed dispersion was coated, using a bar coater, onto the corona-treated surface of the bumpy layer on which the bumpy shape was formed, then dried at 90 °C to 150 °C to form a liquid-repellent layer. The compositions and the thicknesses of the layers of the thermoplastic multilayer resin sheet having a liquid-repellent layer formed on the surface of the bumpy layer on which the bumpy shape was formed are shown in Table 5 (the numerical values in parentheses regarding the liquid-repellent layers indicate the thicknesses of the liquid-repellent layers after drying). Additionally, various properties of the resin sheet produced as described above were evaluated by the aforementioned methods. The results are shown in Table 6.

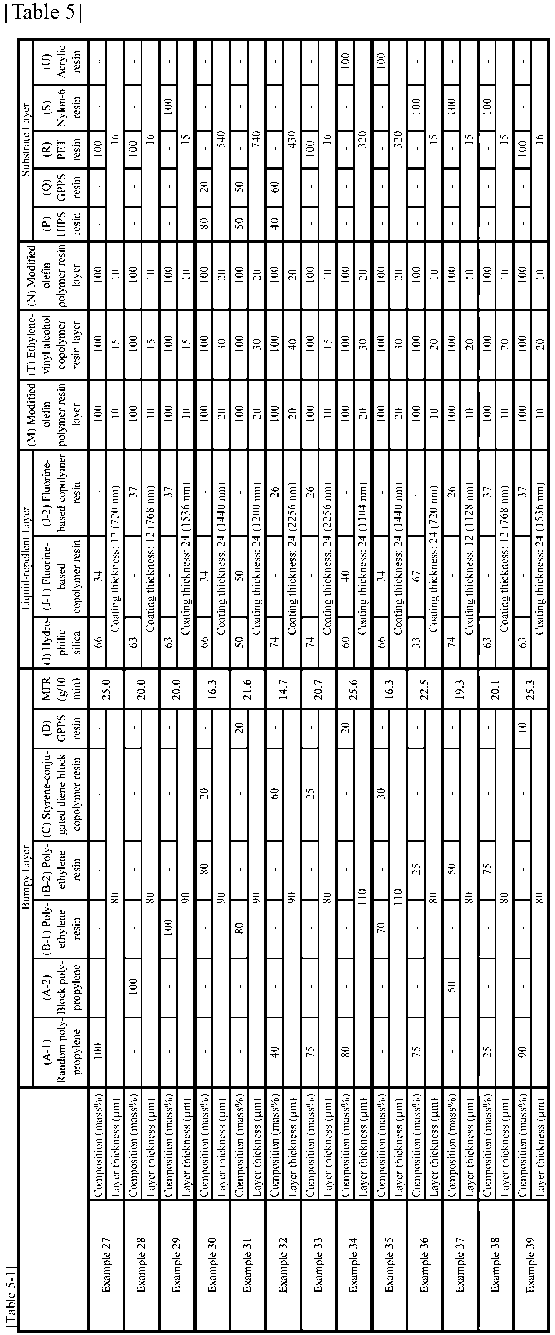

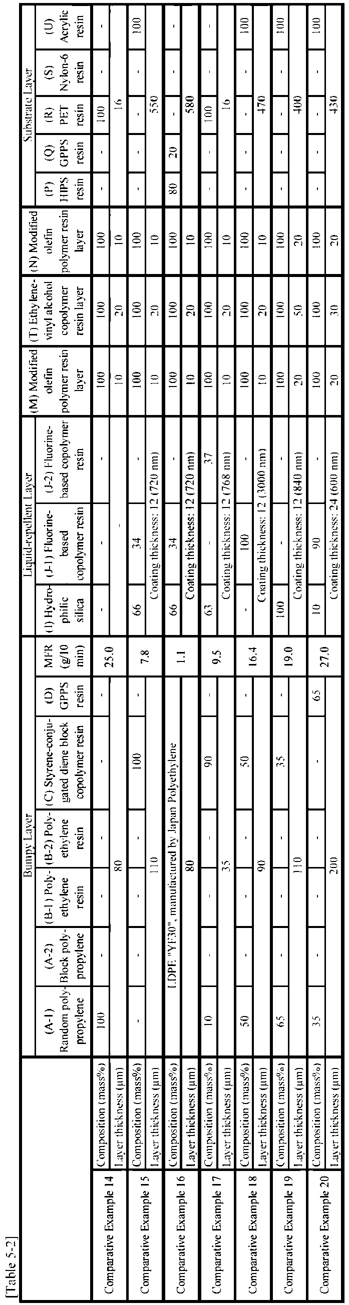

### [Table 6]

**[Table 6]**

| | Thermoplastic Resin Sheet Evaluation | | | | | | | | | | | | | | | | | |
|---|---|---|---|---|---|---|---|---|---|---|---|---|---|---|---|---|---|---|
| | Bump A height (µm) | Bump A bottom diameter (µm) | Bump B height (µm) | Bump B bottom diameter (µm) | Bump top spacing (µm) | Aspect ratio (bump A height/bump A diameter | Aspect ratio (bump B height/bump B diameter | Bump height ratio (bump B height/bump A height) | Bump arrangement | Contact angle (°) | Sliding angle (°) | Contact angle (°) | Sliding angle (°) | Contact angle (°) | Sliding angle (°) | Sealability evaluation (container) peel strength (N) | Sealability evaluation (pouch) peel strength (N) | Oxygen transmission rate (ml/m2· day·atm) |
| | | | | | | | | | | Purified water | Purified water | Salad oil | Salad oil | Liquid detergent | Liquid detergent | | | |
| Example 27 | 63 | 56 | 26 | 28 | 57 | 1.13 | 0.93 | 0.41 | staggered | 155 | 5 | 146 | 20 | 150 | 12 | 3.5 | 10 | 0.29 |
| Example 28 | 78 | 50 | 35 | 36 | 67 | 1.56 | 0.97 | 0.45 | staggered | 155 | 5 | 146 | 20 | 151 | 11 | 3.4 | 10 | 0.29 |
| Example 29 | 82 | 56 | 40 | 37 | 58 | 1.46 | 1.08 | 0.49 | staggered | 155 | 5 | 146 | 20 | 150 | 12 | 3.4 | 10 | 0.29 |
| Example 30 | 64 | 75 | - | - | 74 | 0.85 | - | - | staggered | 152 | 8 | 142 | 25 | 147 | 14 | - | - | 0.15 |
| Example 31 | 64 | 75 | - | - | 74 | 0.85 | - | - | staggered | 152 | 8 | 142 | 25 | 147 | 14 | - | - | 0.15 |
| Example 32 | 55 | 75 | - | - | 71 | 0.73 | - | - | staggered | 152 | 8 | 140 | 29 | 141 | 18 | - | - | 0.1 |
| Example 33 | 64 | 75 | - | - | 74 | 0.85 | - | - | staggered | 152 | 8 | 142 | 25 | 147 | 14 | 3.4 | 10 | 0.29 |
| Example 34 | 66 | 73 | - | - | 73 | 0.90 | - | - | staggered | 155 | 7 | 144 | 24 | 146 | 15 | - | - | 0.15 |
| Example 35 | 66 | 73 | - | - | 73 | 0.90 | - | - | staggered | 155 | 7 | 144 | 24 | 146 | 15 | - | - | 0.15 |
| Example 36 | 130 | 71 | - | - | 65 | 1.83 | - | - | staggered | 151 | 9 | 142 | 27 | 147 | 14 | 3.4 | 10 | 0.17 |
| Example 37 | 63 | 56 | 26 | 28 | 57 | 1.13 | 0.93 | 0.41 | staggered | 155 | 5 | 146 | 20 | 150 | 12 | 3.5 | 10 | 0.17 |
| Example 38 | 78 | 50 | 35 | 36 | 67 | 1.56 | 0.97 | 0.45 | staggered | 155 | 5 | 146 | 20 | 151 | 1 | 3.4 | 10 | 0.17 |
| Example 39 | 82 | 56 | 40 | 37 | 58 | 1.46 | 1.08 | 0.49 | staggered | 155 | 5 | 146 | 20 | 150 | 12 | 3.4 | 10 | 0.17 |
| Comparative Example 14 | 65 | 74 | - | - | 70 | 0.88 | - | - | staggered | 135 | 45 | 107 | no sliding | 76 | no sliding | 3.7 | 10 | 0.17 |
| Comparative Example 15 | | | | | no bumps | formed | | | | 150 | 10 | 50 | no sliding | 40 | no sliding | - | - | 0.17 |
| Comparative Example 16 | 30 | 72 | - | - | 57 | 0.42 | - | - | staggered | 145 | 40 | 94 | no sliding | 55 | no sliding | - | - | 0.17 |
| Comparative Example 17 | 10 | 40 | - | - | 57 | 0.25 | - | - | staggered | 130 | 30 | 65 | no sliding | 40 | no sliding | - | - | 0.17 |
| Comparative Example 18 | 65 | 74 | - | - | 57 | 0.88 | - | - | staggered | 141 | 30 | 115 | no sliding | 104 | no sliding | - | - | 0.17 |
| Comparative Example 19 | 65 | 51 | - | - | 57 | 1.27 | - | - | staggered | 155 | 5 | 20 | no sliding | 30 | no sliding | - | - | 0.05 |
| Comparative Example 20 | 55 | 75 | - | - | 57 | 0.73 | - | - | staggered | 143 | 28 | 122 | no sliding | 112 | no sliding | - | - | 0.29 |

### <Examples 28 to 39, and Comparative Examples 14 to 20>

The resin sheets according to Examples 28 to 39 and Comparative Examples 14 to 20 were produced in the same manner as in Example 27, except that, in Examples 28, 29, 33 and 36 to 39, and Comparative Examples 14 and 17, the compositions, thicknesses and MFR of the layers were set as shown in Table 5; and in Examples 30 to 32, 34 and 35, and Comparative Examples 15, 16 and 18 to 20, five 40 mm single-screw extruders were used to obtain multilayer resin sheets formed by laminating, in order, a bumpy layer/ first sealant resin layer (modified olefin polymer resin layer)/oxygen barrier substrate layer (ethylene-vinyl alcohol copolymer resin layer)/second sealant resin layer (modified olefin polymer resin layer)/substrate layer structure by means of feedblock extrusion, and the compositions, thicknesses and MFR of the layers were set as shown in Table 5. Additionally, in Examples 27 to 29, 33 and 36 to 39, and Comparative Example 14, the sealability was evaluated.

In Comparative Example 14, a liquid-repellent layer was not formed, and in Comparative Example 15, a bumpy shape was not formed. In Comparative Example 16, polyethylene having an MFR of 1.1 g/10 min was used in the bumpy layer, so the transferability was poor and the aspect ratio of the bumps was low, and in Comparative Example 17, the aspect ratio of the bumps was low. In Comparative Example 18, only a fluorine-based copolymer was used in the liquid-repellent layer; in Comparative Example 19, only hydrophilic silica was used in the liquid-repellent layer; and in Comparative Example 20, the proportion of the fluorine-based copolymer resin was high.

The following matters became clear from the results shown in Table 6. In all of Examples 27 to 39, the sheets obtained results satisfying all of the evaluation criteria relating to oxygen barrier properties, sealability and liquid repellency (contact angle and sliding angle) for each liquid. In contrast therewith, in Comparative Examples 14 to 20, the liquids other than purified water did not slide on the sheet.

While the present invention has been explained above by referring to various embodiments, it need not be mentioned that the technical scope of the present invention is not limited to the scope described for the embodiments above. It will be clear to a person skilled in the art that various modifications or improvements can be made to the above-described embodiments. Additionally, it is clear, from the recitations in the claims, that such embodiments to which modifications or improvements have been made may be included within the technical scope of the present invention.

### REFERENCE SIGNS LIST

- 1: Bumpy layer
- 1a: Bump
- 1b: Bump top
- 1c: First bump
- 1d: Second bump
- h: Bump height
- t: Bump top spacing
- 2: Liquid-repellent layer
- 3: Sealant resin layer
- 3a: First sealant resin layer
- 3b: Second sealant resin layer
- 4: Substrate layer
- 5: Oxygen-barrier substrate layer

## Claims

1. A liquid-repellent resin sheet comprising a bumpy layer (1) having bumps (1a) of at least one type on one surface thereof, and a liquid-repellent layer (2) provided on the surface having the bumps on the bumpy layer; wherein
the bumpy layer (1) contains a thermoplastic resin composition;
the liquid-repellent layer (2) contains a fluorine-based copolymer resin composition containing hydrophilic microparticles; and
the bumps (1a) have an aspect ratio, bump height/bump bottom diameter, of 0.6 to 2.5.

2. The liquid-repellent resin sheet according to claim 1, wherein the thermoplastic resin composition has a melt mass-flow rate, at 190 °C to 300 °C, of 4 g/10 min or higher.

3. The liquid-repellent resin sheet according to claim 1 or 2, wherein the hydrophilic microparticles have an average primary particle size of 5 nm to 1000 nm.

4. The liquid-repellent resin sheet according to any one of claims 1 to 3, wherein the hydrophilic microparticles are particles of hydrophilic silica having silanol groups on surfaces thereof.

5. The liquid-repellent resin sheet according to any one of claims 1 to 4, wherein the bumps (1a) include first bumps (1c) and second bumps (1d); the heights of the first bumps and the heights of the second bumps are 10 µm to 150 µm; and the spacing between the tops of adjacent bumps is 10 µm to 100 µm.

6. The liquid-repellent resin sheet according to any one of claims 1 to 5, wherein the hydrophilic microparticle content is 20 mass% to 80 mass%, and the fluorine-based copolymer resin content is 80 to 20 mass%.

7. The liquid-repellent resin sheet according to any one of claims 1 to 6, having, on the other surface of the bumpy layer that is not the surface having the bumps, at least one or more substrate layers (4) containing a resin selected from among styrene resins, olefin resins, polyester resins, nylon resins, ethylene-vinyl alcohol copolymer resins, acrylic resins and sealant resins.

8. The liquid-repellent resin sheet according to any one of claims 1 to 7, wherein the surface on the side having the liquid-repellent layer (2) has a contact angle of 130° or more and a sliding angle of 40° or less with respect to a water-based liquid, an oil-based liquid or a surfactant-based liquid.

9. An article using the liquid-repellent resin sheet according to any one of claims 1 to 8.

10. The article according to claim 9, wherein the article is a building material, a daily-use article or a packaging material.

11. The article according to claim 10, wherein the article is a wallpaper material, a kitchen/bathroom material, a lid material for a food product container, a pouch material or rain gear.

## Patentansprüche

1. Flüssigkeitsabweisende Harzfolie, umfassend eine Erhebungsschicht (1) mit Erhebungen (1a) zumindest eines Typs auf einer Oberfläche davon, und eine flüssigkeitsabweisende Schicht (2), die auf der Oberfläche mit den Erhebungen bereitgestellt wird; wobei
die Erhebungsschicht (1) eine thermoplastische Harzzusammensetzung enthält;
die flüssigkeitsabweisende Schicht (2) eine fluorbasierte Copolymer-Harzzusammensetzung, enthaltend hydrophile Mikropartikel, enthält; und
die Erhebungen (1a) ein Seitenverhältnis Erhebungshöhe/Erhebungsbodendurchmesser von 0,6 bis 2,5 aufweisen.

2. Flüssigkeitsabweisende Harzfolie nach Anspruch 1, wobei die thermoplastische Harzzusammensetzung eine Schmelzmassenflussrate, bei 190°C bis 300°C, von 4 g/10 min oder höher aufweist.

3. Flüssigkeitsabweisende Harzfolie nach Anspruch 1 oder 2, wobei die hydrophilen Mikropartikel eine durchschnittliche Primärpartikelgröße von 5 nm bis 1000 nm aufweisen.

4. Flüssigkeitsabweisende Harzfolie nach einem der Ansprüche 1 bis 3, wobei die hydrophilen Mikropartikel Partikel aus hydrophilem Siliciumdioxid mit Silanolgruppen auf ihren Oberflächen sind.

5. Flüssigkeitsabweisende Harzfolie nach einem der Ansprüche 1 bis 4, wobei die Erhebungen (1a) erste Erhebungen (1c) und zweite Erhebungen (1d) umfassen; die Höhen der ersten Erhebungen und die Höhen der zweiten Erhebungen 10 µm bis 150 µm sind; und der Abstand zwischen den Spitzen benachbarter Erhebungen 10 µm bis 100 µm ist.

6. Flüssigkeitsabweisende Harzfolie nach einem der Ansprüche 1 bis 5, wobei der Gehalt an den hydrophilen Mikropartikeln von 20 Massen% bis 80 Massen% und der Gehalt an fluorbasiertem Copolymer-Harz 80 bis 20 Massen% ist.

7. Flüssigkeitsabweisende Harzfolie nach einem der Ansprüche 1 bis 6, aufweisend auf der anderen Oberfläche der Erhebungsschicht, die nicht die Oberfläche mit den Erhebungen ist, zumindest eine oder mehrere Substratschichten (4), enthaltend ein Harz, ausgewählt unter anderem aus Styrolharzen, Olefinharzen, Polyesterharzen, Nylonharzen, Ethylen-Vinylalkohol-Copolymer-Harzen, Acrylharzen und Dichtmittelharzen.

8. Flüssigkeitsabweisende Harzfolie nach einem der Ansprüche 1 bis 7, wobei die Oberfläche auf der Seite mit der flüssigkeitsabweisenden Schicht (2) einen Kontaktwinkel von 130° oder mehr und einen Gleitwinkel von 40° oder weniger in Bezug auf eine Flüssigkeit auf Wasserbasis, eine Flüssigkeit auf Ölbasis oder eine Flüssigkeit auf Tensidbasis, aufweist.

9. Artikel, der die flüssigkeitsabweisende Harzfolie nach einem der Ansprüche 1 bis 8 verwendet.

10. Artikel nach Anspruch 9, wobei der Artikel ein Baumaterial, ein Gegenstand für den täglichen Gebrauch oder ein Verpackungsmaterial ist.

11. Artikel nach Anspruch 10, wobei der Artikel ein Tapetenmaterial, ein Küchen/Bad-Material, ein Deckelmaterial für einen Lebensmittelbehälter, ein Beutelmaterial oder eine Regenbekleidung ist.

## Revendications

1. Feuille de résine repoussant les liquides comprenant une couche de forme concavo-convexe (1) ayant des formes convexes (1a) d'au moins un type sur une de ses surfaces, et une couche repoussant les liquides (2) prévue sur la surface ayant les formes convexes sur la couche de forme concavo-convexe ; dans laquelle
la couche de forme concavo-convexe (1) contient une composition de résine thermoplastique ;
la couche repoussant les liquides (2) contient une composition de résine de copolymère à base de fluor contenant des microparticules hydrophiles ; et
les formes convexes (1a) ont un rapport de forme, hauteur de forme convexe/diamètre de surface inférieure de forme convexe, de 0,6 à 2,5.

2. Feuille de résine repoussant les liquidesselon la revendication 1, dans laquelle la composition de résine thermoplastique a un débit de masse fondue, de 190 °C à 300 °C, de 4 g/10 min ou plus.

3. Feuille de résine repoussant les liquidesselon la revendication 1 ou 2, dans laquelle les microparticules hydrophiles ont une taille moyenne de particules primaires de 5 nm à 1000 nm.

4. Feuille de résine repoussant les liquidesselon l'une quelconque des revendications 1 à 3, dans laquelle les microparticules hydrophiles sont des particules de silice hydrophile ayant des groupes silanol sur leurs surfaces.

5. Feuille de résine repoussant les liquidesselon l'une quelconque des revendications 1 à 4, dans laquelle les formes convexes (1a) incluent des premières formes convexes (1c) et des secondes formes convexes (1d) ;
les hauteurs des premières formes convexes et les hauteurs des secondes formes convexes sont de 10 µm à 150 µm ; et l'espacement entre les sommets des formes convexes adjacentes est de 10 µm à 100 µm.

6. Feuille de résine repoussant les liquidesselon l'une quelconque des revendications 1 à 5, dans laquelle la teneur en microparticules hydrophiles est de 20 % en masse à 80 % en masse, et la teneur en résine de copolymère à base de fluor est de 80 à 20 % en masse.

7. Feuille de résine repoussant les liquidesselon l'une quelconque des revendications 1 à 6, ayant, sur l'autre surface de la couche de forme concavo-convexe qui n'est pas la surface présentant les formes convexes, au moins une ou plusieurs couches de substrat (4) contenant une résine sélectionnée parmi les résines de styrène, les résines d'oléfine, les résines de polyester, les résines de nylon, les résines de copolymère éthylène-alcool vinylique, les résines acryliques et les résines d'étanchéité.

8. Feuille de résine repoussant les liquidesselon l'une quelconque des revendications 1 à 7, dans laquelle la surface du côté ayant la couche repoussant les liquides (2) a un angle de contact de 130° ou plus et un angle de glissement de 40° ou moins par rapport à un liquide à base d'eau, un liquide à base d'huile ou un liquide à base de tensioactif.

9. Article utilisant la feuille de résine repoussant les liquidesselon l'une quelconque des revendications 1 à 8.

10. Article selon la revendication 9, dans lequel l'article est un matériau de construction, un article à usage quotidien ou un matériau d'emballage.

11. Article selon la revendication 10, dans lequel l'article est un matériau de papier peint, un matériau de cuisine/salle de bain, un matériau de couvercle pour un récipient de produit alimentaire, un matériau de poche ou un vêtement de pluie.
